(19) Europäisches Patentamt
European Patent Office
Office européen des brevets

(11) EP 3 527 596 B1

(12) **EUROPEAN PATENT SPECIFICATION**

(45) Date of publication and mention of the grant of the patent:
**27.01.2021 Bulletin 2021/04**

(21) Application number: **17861045.7**

(22) Date of filing: **10.10.2017**

(51) Int Cl.:
***C08G 18/28*** (2006.01) ***C08G 18/08*** (2006.01)
***C09D 175/04*** (2006.01) ***C08G 18/70*** (2006.01)
***C08G 18/62*** (2006.01) ***C08G 18/79*** (2006.01)

(86) International application number:
**PCT/JP2017/036635**

(87) International publication number:
**WO 2018/070371 (19.04.2018 Gazette 2018/16)**

(54) **POLYISOCYANATE COMPOSITION**

POLYISOCYANATZUSAMMENSETZUNG

COMPOSITION DE POLYISOCYANATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2016 JP 2016200342**

(43) Date of publication of application:
**21.08.2019 Bulletin 2019/34**

(73) Proprietor: **ASAHI KASEI KABUSHIKI KAISHA**
**Tokyo 100-0006 (JP)**

(72) Inventor: **NAKAJIMA Kazuko**
**Tokyo 101-8101 (JP)**

(74) Representative: **Strehl Schübel-Hopf & Partner**
**Maximilianstrasse 54**
**80538 München (DE)**

(56) References cited:
**JP-A- 2003 533 566**
**JP-A- 2010 533 753**
**JP-A- 2013 129 722**
**JP-A- 2015 205 957**
**JP-A- 2016 017 157**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 527 596 B1

## Description

### TECHNICAL FIELD

The present invention relates to a polyisocyanate composition.

### BACKGROUND ART

In recent years, from the viewpoint of environmental protection, a two-component urethane coating composition of room temperature crosslinking type, which has been conventionally used as a solvent-based paint, has been required to be made aqueous. However, the polyisocyanate used as a curing agent in the two-component urethane coating composition is difficult to disperse in water, and it is easily reacted with water to generate carbon dioxide. Therefore, development of a polyisocyanate which has a high emulsifying property and suppresses the reaction between an isocyanate group and water in a water-dispersed state is proceeding.
Patent Document 1 discloses a reaction product of a polyisocyanate compound and a compound having at least one sulfonic acid group and isocyanate reactive group.
Patent Document 2 and Patent Document 3 disclose a polyisocyanate composition containing a modified polyisocyanate obtained by reacting an amine salt of a sulfonic acid having a hydroxyl group with a polyisocyanate.
Patent Document 4 and Patent Document 5 disclose a modified polyisocyanate obtained by reacting an aminosulfonic acid having a specific structure with a polyisocyanate.

### PRIOR ART LITERATURE

#### Patent Documents

[Patent Document 1] Japanese Unexamined Patent Application, First Publication No. H8-176267
[Patent Document 2] Japanese Unexamined Patent Application, First Publication No. 2015-205957
[Patent Document 3] Japanese Unexamined Patent Application, First Publication No. 2016-17157
[Patent Document 4] Japanese Patent No. 4806511
[Patent Document 5] PCT International Publication No. WO2015/035673

### DISCLOSURE OF INVENTION

#### Problems to be Solved by the Invention

Aqueous two-component urethane coating compositions are applied to furniture and building materials, residential wood products, wooden floors of houses and school facilities, trains and construction machines, agricultural cars. For these applications, the appearance of the synthesized products is regarded as important, and polyisocyanate compositions with less turbidity and less yellowish color are required.
Patent Documents 1 to 3 disclose that the dispersibility in water can be improved by using a polyisocyanate containing a sulfonic acid group. However, since the compatibility between the sulfonic acid group and the polyisocyanate is poor, turbidity is generated in the synthesized product. If highly organic sulfonic acids or amine salts of the highly organic sulfonic acids are used in order to improve the turbidity, the appearance of the coated film will be deteriorated and the hydrophilicity will be lowered. Therefore, it is necessary to modify a large number of the sulfonic acids or amine salts of the sulfonic acids, and there is a problem in that the hardness of the coating film is lowered.
In addition, there are some cases where solvents and catalysts are used to improve the turbidity, but in such cases, there is a problem in that the use thereof is restricted because the synthesized product tends to be colored yellowish.
Patent Documents 4 to 5 disclose that a modified polyisocyanate obtained by performing a reaction with aminosulfonic acid having a specific structure is used to improve hardness of a coating film and solvent resistance of a coating film. Since the aminosulfonic acid having a specific structure is relatively high in hydrophobicity, it has a good compatibility with the polyisocyanate and the synthesized product is transparent, but there is a problem in that the appearance of the coated film deteriorates. In addition, despite the relatively high hydrophobicity of aminosulfonic acid, there was also a problem in that the pot life is short.
As described above, in any of the polyisocyanate compositions disclosed in Patent Documents 1 to 5, it was difficult to satisfy the requirement of simultaneously achieving both a good synthesized product appearance (turbidity and yellowish color), good water dispersibility (emulsifying power), good coating film appearance, good coating film

hardness and good pot life (the retention of isocyanate).

In view of the above, it is an object of the present invention to provide a polyisocyanate composition which shows an excellent dispersibility when dispersed in water or a main agent containing water, has less turbidity and yellowish color, and has a good coating film appearance, good coating film hardness, and a good pot life (retention rate of isocyanate), and a coating composition using the same.

Means for Solving the Problems

The present inventors have discovered that a polyisocyanate composition including a polyisocyanate containing a sulfonic acid anion group in the molecule and two or more tertiary ammonium cations of an amine compound can make it possible to achieve both an excellent water dispersibility and an appearance of the synthesized product. The present inventors have also discovered that using an aqueous coating composition containing the polyisocyanate composition can make it is possible to form a coating film showing a good pot life (retention rate of isocyanate) and having a good appearance and hardness, thereby completing the present invention.

That is, the present invention includes the following aspects.

A polyisocyanate composition according to the first aspect of the present invention includes
a polyisocyanate containing a sulfonic acid anion group in the molecule; and
at least one tertiary ammonium cation of an amine compound represented by the following general formula (1) and at least one tertiary ammonium cation of an amine compound represented by the following general formula (2), or at least two tertiary ammonium cations of amine compounds represented by the general formula (1) having different total carbon numbers of $R^{11}$, $R^{12}$ and $R^{13}$.

[Chemical formula 1]

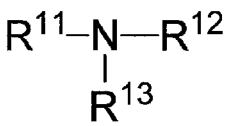

(1)

(In formula (1), $R^{11}$, $R^{12}$ and $R^{13}$ are each independently a hydrocarbon group having 1 to 6 carbon atoms which may contain an ether bond. At least one of $R^{11}$, $R^{12}$ and $R^{13}$ may contain a ring structure, and two or more of $R^{11}$, $R^{12}$ and $R^{13}$ may be bonded to each other to form a ring structure. The ring structure is an aromatic ring, a cycloalkyl group having 5 or 6 carbon atoms, a 5-membered or 6-membered ring in which $R^{11}$ and $R^{12}$ are bonded to each other, or a multi-membered multiple ring in which $R^{11}$, $R^{12}$ and $R^{13}$ are bonded to each other. The total carbon number of $R^{11}$, $R^{12}$ and $R^{13}$ is 8 or less.)

[Chemical formula 2]

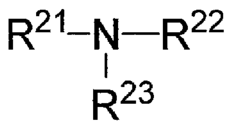

(2)

(In formula (2), $R^{21}$, $R^{22}$ and $R^{23}$ are each independently a hydrocarbon group having 1 to 19 carbon atoms which may contain an ether bond. At least one of $R^{21}$, $R^{22}$ and $R^{23}$ may contain a ring structure, and two or more of $R^{21}$, $R^{22}$ and $R^{23}$ may be bonded to each other to form a ring structure. The ring structure may be an aromatic ring, a cycloalkyl group having 5 or 6 carbon atoms, a 5-membered or 6-membered ring in which $R^{21}$ and $R^{22}$ are bonded to each other, or a multi-membered multiple ring in which $R^{21}$, $R^{22}$ and $R^{23}$ are bonded to each other. The total carbon number of $R^{21}$, $R^{22}$ and $R^{23}$ is 9 or more.)

In the polyisocyanate composition according to the first aspect, the polyisocyanate containing a sulfonic acid anion group in the molecule may be one obtained by a reaction of two or more amine salts of a sulfonic acid having an active hydrogen group with a polyisocyanate, and the amine salt of a sulfonic acid having an active hydrogen group may be a salt of a sulfonic acid having an active hydrogen group with at least one amine compound represented by the general formula (1) and at least one amine compound represented by the general formula (2), or may be a salt of a

sulfonic acid having an active hydrogen group with at least two amine compounds represented the general formula (1).

In the polyisocyanate composition according to the first aspect, the active hydrogen group may be a hydroxyl group.

In the polyisocyanate composition according to the first aspect, the sulfonic acid having an active hydrogen group may be a compound represented by the following general formula (3).

[Chemical formula 3] $HO\text{-}R^{31}\text{-}SO_3H$ (3)

(In formula (3), $R^{31}$ is a hydrocarbon group having 1 to 10 carbon atoms which may contain at least one selected from the group consisting of a hydroxyl group, an ether bond, an ester bond, a carbonyl group and an imino group. $R^{31}$ may contain a ring structure. The ring structure is an aromatic ring, a 5-membered or 6-membered ring containing two nitrogen atoms, or a 5-membered or 6-membered ring containing a nitrogen atom and an oxygen atom.)

In the polyisocyanate composition according to the first aspect, the polyisocyanate containing a sulfonic acid anion group in the molecule may be one obtained by a reaction of a sulfonic acid having an active hydrogen group with a polyisocyanate.

In the polyisocyanate composition according to the first aspect, the active hydrogen group may be an amino group.

In the polyisocyanate composition according to the first aspect, the sulfonic acid having an active hydrogen group may be a compound represented by the following general formula (4).

[Chemical formula 4]

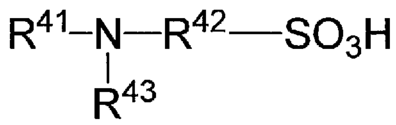

(4)

(In formula (4), $R^{41}$ and $R^{43}$ are each independently a hydrogen atom or a hydrocarbon group having 1 to 12 carbon atoms which may contain a hydroxyl group. At least one of $R^{41}$ and $R^{43}$ is a hydrogen atom. $R^{42}$ is a hydrocarbon group having 1 to 12 carbon atoms which may contain a hydroxyl group.)

In the polyisocyanate composition according to the first aspect, the amine compound represented by the general formula (1) is at least one selected from the group consisting of a cyclic amine compound, an amine compound containing a chain aliphatic hydrocarbon group and an amine compound containing a cyclic aliphatic hydrocarbon group, and the amine compound represented by the general formula (2) is at least one selected from the group consisting of an amine compound containing a chain aliphatic hydrocarbon group and an amine compound containing a cyclic aliphatic hydrocarbon group.

In the polyisocyanate composition according to the first aspect, the polyisocyanate may be at least one selected from the group consisting of an aliphatic polyisocyanate, an alicyclic polyisocyanate and an araliphatic polyisocyanate.

A method for producing a polyisocyanate composition according to the second aspect of the present invention includes

(A) reacting two or more amine salts of a sulfonic acid having an active hydrogen group with a polyisocyanate; or
(B) reacting a sulfonic acid having an active hydrogen group, a polyisocyanate, at least one amine compound represented by the following general formula (1) and at least one amine compound represented by the following general formula (2), or reacting a sulfonic acid having an active hydrogen group, a polyisocyanate and at least two amine compounds represented by the general formula (1) having different total carbon numbers of $R^{11}$, $R^{12}$ and $R^{13}$,

wherein the reaction is carried out at a molar ratio of isocyanate group/active hydrogen group of 2 to 400, and
the amine salts of a sulfonic acid having an active hydrogen group are salts of the sulfonic acid having an active hydrogen group with at least one amine compound represented by the general formula (1) and at least one amine compound represented by the general formula (2), or slats of the sulfonic acid having an active hydrogen group with at least two amine compounds represented by the general formula (1).

[Chemical formula 5]

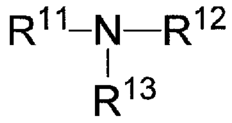

(1)

(In formula (1), $R^{11}$, $R^{12}$ and $R^{13}$ are each independently a hydrocarbon group having 1 to 6 carbon atoms which may contain an ether bond. At least one selected from the group consisting of $R^{11}$, $R^{12}$ and $R^{13}$ may contain a ring structure, two or more selected from the group consisting of $R^{11}$, $R^{12}$ and $R^{13}$ may be bonded to each other to form a ring structure. The ring structure is an aromatic ring, a cycloalkyl group having 5 or 6 carbon atoms, a 5-membered or 6-membered ring in which $R^{11}$ and $R^{12}$ are bonded to each other, or a multi-membered multiple ring in which $R^{11}$, $R^{12}$ and $R^{13}$ are bonded to each other. The total carbon number of $R^{11}$, $R^{12}$ and $R^{13}$ is 8 or less.)

[Chemical formula 6]

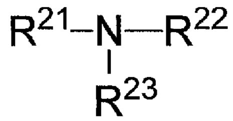

(2)

(In formula (2), $R^{21}$, $R^{22}$ and $R^{23}$ are each independently a hydrocarbon group having 1 to 19 carbon atoms which may contain an ether bond. At least one selected from the group consisting of $R^{21}$, $R^{22}$ and $R^{23}$ may contain a ring structure, two or more selected from the group consisting of $R^{21}$, $R^{22}$ and $R^{23}$ may be bond to each other to form a ring structure. The ring structure is an aromatic ring, a cycloalkyl group having 5 or 6 carbon atoms, a 5-membered or 6-membered ring in which $R^{21}$ and $R^{22}$ are bonded to each other, or a multi-membered multiple ring in which $R^{21}$, $R^{22}$ and $R^{23}$ are bonded to each other. The total carbon number of $R^{21}$, $R^{22}$ and $R^{23}$ is 9 or more.)

In the method for producing a polyisocyanate composition according to the second aspect, the active hydrogen group may be at least one selected from the group consisting of an amino group and a hydroxyl group.

In the method for producing a polyisocyanate composition according to the second aspect, the sulfonic acid having an active hydrogen group may be a compound represented by the following general formula (3).

[Chemical formula 7] $HO\text{-}R^{31}\text{-}SO_3H$ (3)

(In formula (3), $R^{31}$ is a hydrocarbon group having 1 to 10 carbon atoms which may contain at least one selected from the group consisting of a hydroxyl group, an ether bond, an ester bond, a carbonyl group and an imino group. $R^{31}$ may contain a ring structure. The ring structure is an aromatic ring, a 5-membered or 6-membered ring containing two nitrogen atoms, or a 5-membered or 6-membered ring containing a nitrogen atom and an oxygen atom.)

In the method for producing the polyisocyanate composition according to the second aspect, in the amine salt of a sulfonic acid, the molar ratio between the amine compound represented by the general formula (1) and the amine compound represented by the general formula (2) is 10/90 to 90/10.

A coating composition according to the third aspect of the present invention includes the polyisocyanate composition according to the first aspect.

The coated substrate according to the fourth aspect of the present invention is a substrate coated with the coating composition according to the third aspect.

Effects of the Invention

The polyisocyanate composition of the above aspect has less turbidity and yellowish color, and makes it possible to obtain an excellent dispersibility when dispersed in water or a main agent containing water. In addition, the polyisocyanate composition of the above aspect shows a good pot life and makes it possible to form a coating film having an excellent appearance and an excellent hardness.

BEST MODE FOR CARRYING OUT THE INVENTION

Hereinafter, embodiments for carrying out the present invention (hereinafter, referred to as "present embodiment") will be described in detail.

<<Polyisocyanate Composition>>

The polyisocyanate composition of the present embodiment includes a polyisocyanate containing a sulfonic acid anion group in the molecule; and at least one tertiary ammonium cation of an amine compound represented by the following general formula (1) (hereinafter, may be referred to as "amine compound (1)") and at least one tertiary ammonium cation of an amine compound represented by the following general formula (2) (hereinafter, may be referred to as "amine compound (2)"), or two or more tertiary ammonium cations of the amine compound represented by the general formula (1) having different total carbon numbers of $R^{11}$, $R^{12}$ and $R^{13}$.

[Chemical formula 8]

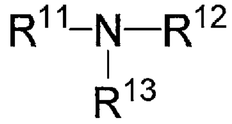

(1)

In formula (1), $R^{11}$, $R^{12}$ and $R^{13}$ are each independently a hydrocarbon group having 1 to 6 carbon atoms which may contain an ether bond. At least one selected from the group consisting of $R^{11}$, $R^{12}$ and $R^{13}$ may contain a ring structure, and two or more selected from the group consisting of $R^{11}$, $R^{12}$ and $R^{13}$ may be bonded to each other to form a ring structure. The ring structure is an aromatic ring, a cycloalkyl group having 5 or 6 carbon atoms, a 5-membered or 6-membered ring in which $R^{11}$ and $R^{12}$ are bonded to each other, or a multi-membered multiple ring in which $R^{11}$, $R^{12}$ and $R^{13}$ are bonded to each other. The total carbon number of $R^{11}$, $R^{12}$ and $R^{13}$ is 8 or less.

[Chemical formula 9]

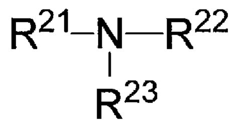

(2)

In formula (2), $R^{21}$, $R^{22}$ and $R^{23}$ are each independently a hydrocarbon group having 1 to 19 carbon atoms which may contain an ether bond. At least one selected from the group consisting of $R^{21}$, $R^{22}$ and $R^{23}$ may contain a ring structure, and two or more selected from the group consisting of $R^{21}$, $R^{22}$ and $R^{23}$ may be bonded to each other to form a ring structure. The ring structure may be an aromatic ring, a cycloalkyl group having 5 or 6 carbon atoms, a 5-membered or 6-membered ring in which $R^{21}$ and $R^{22}$ are bonded to each other, or a multi-membered multiple ring in which $R^{21}$, $R^{22}$ and $R^{23}$ are bonded to each other. The total carbon number of $R^{21}$, $R^{22}$ and $R^{23}$ is 9 or more.

The polyisocyanate composition of the present embodiment, as shown in Examples described later, includes a polyisocyanate containing a sulfonic acid anion group in the molecule and two or more tertiary ammonium cations of an amine compound. This makes it possible to improve the appearance (turbidity and yellowish color) of the composition while maintaining a high water dispersibility for the polyisocyanate composition of the present embodiment. Further, since the compatibility between the amine compound and the polyisocyanate can be improved, the pot life can also be lengthened.

The term "pot life" as used herein refers to a period during which the performance of the composition after being prepared by mixing a main agent and a curing agent but before curing is maintained. It is also called "usable time". As shown in Examples described later, the pot life can be evaluated by measuring the time during which 80% or more of the isocyanate groups are retained in the coating composition prepared by mixing the polyisocyanate composition (curing agent) of the present embodiment and a main agent.

In addition, the polyisocyanate composition of the present embodiment generally contains unreacted polyisocyanates that are polyisocyanates not containing a sulfonic acid anion group in the molecule. In addition, each of the properties of the polyisocyanate composition according to the present embodiment, which will be described later, unless

otherwise specified, is a property in a state of including a polyisocyanate containing a sulfonic acid anion group in the molecule and an unreacted polyisocyanate (a polyisocyanate not containing a sulfonic acid anion group in the molecule).

In the polyisocyanate composition of the present embodiment, a ratio between the unreacted polyisocyanate and the polyisocyanate containing a sulfonic acid anion group in the molecule can be calculated, for example, from a ratio of the isocyanate group containing a sulfonic acid anion group in the molecule to 100 moles of the isocyanate group containing in the raw material polyisocyanate.

In the polyisocyanate composition of the present embodiment, the sulfur atom content is preferably 0.1 to 10% by mass, more preferably 0.2 to 5.0% by mass, and even more preferably 0.3 to 2.0 mass% from the viewpoint of the emulsifiability and the coating film physical properties.

<Polyisocyanate Containing Sulfonic Acid Anion Group in Molecule>

The polyisocyanate containing a sulfonic acid anion group in the molecule included in the polyisocyanate composition of the present embodiment is a reactant obtained by reacting a sulfonic acid having an active hydrogen group or an amine salt thereof with a polyisocyanate.

[Polyisocyanate]

Although the polyisocyanate used as the polyisocyanate containing a sulfonic acid anion group in the molecule is not particularly limited, examples thereof include a polyisocyanate derived from at least one of diisocyanates selected from an aliphatic diisocyanate, an alicyclic diisocyanate and an aromatic diisocyanate. The polyisocyanate used as the polyisocyanate containing a sulfonic acid anion group in the molecule is preferably at least one selected from the group consisting of an aliphatic polyisocyanate, an alicyclic polyisocyanate, and an aromatic polyisocyanate from the viewpoint of the industrial availability.

Although the aliphatic diisocyanate is not particularly limited, examples thereof include 1,4-diisocyanatobutane, 1,5-diisocyanatopentane, ethyl (2,6-diisocyanato) hexanoate, 1,6-diisocyanatohexane (hereinafter, also referred to as "HDI"), 1,9-diisocyanatononane, 1,12-diisocyanatododecane, 2,2,4- or 2,4,4-trimethyl-1,6-diisocyanatohexane.

Although the alicyclic diisocyanate is not particularly limited, examples thereof include 1,3- or 1,4-bis (isocyanatomethyl) cyclohexane (hereinafter, also referred to as "hydrogenated XDI"), 1,3- or 1,4-diisocyanatocyclohexane, 3,5,5-trimethyl 1-isocyanato-3-(isocyanatomethyl) cyclohexane (hereinafter, also referred to as "IPDI"), 4-4'-diisocyanato-dicyclohexylmethane (hereinafter, also referred to as "hydrogenated MDI"), 2,5- or 2,6-diisocyanatomethylnorbornane.

Although the aromatic diisocyanate is not particularly limited, examples thereof include xylylene diisocyanate, tolylene diisocyanate, diphenylmethane diisocyanate.

Among the examples, HDI, IPDI, hydrogenated XDI or hydrogenated MDI is preferable as the diisocyanate.

Although the polyisocyanate derived from the diisocyanate is not particularly limited, examples thereof include polyisocyanates shown in the following (a) to (h).

(a) A polyisocyanate having a uretdione structure obtained by cyclizing and dimerizing two isocyanate groups;
(b) a polyisocyanate having an isocyanurate structure or an iminooxadiazinedione structure obtained by cyclizing and trimerizing three isocyanate groups;
(c) a polyisocyanate having a biuret structure obtained by reacting three isocyanate groups with one molecule of water;
(d) a polyisocyanate having an oxadiazinetrione structure obtained by reacting two isocyanate groups with one molecule of carbon dioxide;
(e) a polyisocyanate having a plurality of urethane groups obtained by reacting one isocyanate group with one hydroxyl group;
(f) a polyisocyanate having an allophanate structure obtained by reacting two isocyanate groups with one hydroxyl group;
(g) a polyisocyanate having an acylurea group obtained by reacting one isocyanate group with one carboxyl group;
(h) a polyisocyanate having a urea structure obtained by reacting one isocyanate group with one primary or secondary amine.

In addition, the polyisocyanate used as the polyisocyanate containing a sulfonic acid anion group in the molecule may contain an aliphatic triisocyanate. Examples of the aliphatic triisocyanate include 1,3,6-triisocyanatohexane, 1,8-diisocyanato-4-isocyanatomethyloctane, 2-isocyanatoethyl-2,6-diisocyanato-hexanoate.

In addition, these polyisocyanates may be modified with a vinyl polymer having a nonionic hydrophilic group

such as an alkoxypolyalkylene glycol, or having a hydroxyl group and a nonionic hydrophilic group.
In addition, these polyisocyanates may be used alone or in combination of two or more.

[Sulfonic Acid Having Active Hydrogen Group]

In the sulfonic acid having an active hydrogen group used for the polyisocyanate containing a sulfonic acid anion group in the molecule, examples of the active hydrogen group include an amino group, a carboxy group, a hydroxyl group. Among the examples, the active hydrogen group is preferably at least one selected from the group consisting of an amino group and a hydroxyl group.

(Sulfonic acid (3))

In the case where the active hydrogen group is a hydroxyl group, examples of the sulfonic acid having a hydroxyl group include a compound represented by the following general formula (3) (hereinafter, abbreviated as "sulfonic acid (3)").

[Chemical formula 10] $HO\text{-}R^{31}\text{-}SO_3H$ (3)

In formula (3), $R^{31}$ is a hydrocarbon group having 1 to 10 carbon atoms which may contain at least one selected from the group consisting of a hydroxyl group, an ether bond, an ester bond, a carbonyl group and an imino group. $R^{31}$ may contain a ring structure. The ring structure is an aromatic ring, a 5-membered or 6-membered ring containing two nitrogen atoms, or a 5-membered or 6-membered ring containing a nitrogen atom and an oxygen atom.

•$R^{31}$

In the general formula (3), $R^{31}$ represents a hydrocarbon group having 1 to 10 carbon atoms which may contain at least one selected from the group consisting of a hydroxyl group, an ester bond (-COO-), an ether bond (-O-), a carbonyl group (-C(=O)-), an imino group (-NR-) and a ring structure.
The hydrocarbon group having 1 to 10 carbon atoms may be a divalent aliphatic hydrocarbon group having 1 to 10 carbon atoms and may also be a divalent aromatic hydrocarbon group having 6 to 10 carbon atoms. The divalent aliphatic hydrocarbon group having 1 to 10 carbon atoms is preferably a chain alkylene group having 1 to 6 carbon atoms. In the case of a chain alkylene group having 1 to 6 carbon atoms, it may be a group containing a ring structure as a part of the chain alkylene group. The alkylene group having 1 to 6 carbon atoms may be linear or branched.
Among the examples, $R^{31}$ is preferably a chain alkylene group having 1 to 6 carbon atoms, a divalent aromatic hydrocarbon group having 6 to 10 carbon atoms (arylene group), a divalent alkylene group having 1 to 6 carbon atoms and containing an aromatic ring, a divalent alkylene group having 1 to 6 carbon atoms and containing a 5-membered or 6-membered ring containing two nitrogen atoms, and a divalent alkylene group having 1 to 6 carbon atoms and containing a 5-membered or 6-membered ring containing a nitrogen atom and an oxygen atom.
Preferable examples of the sulfonic acid (3) include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzene sulfonic acid, hydroxy(methyl) benzenesulfonic acid, 4-(2-hydroxyethyl)-l -piperazineethanesulfonic acid, 4-(2-hydroxyethyl)-1-piperazinepropanesulfonic acid, 2-hydroxy-3-morpholinopropanesulfonic acid.
In addition, these compounds are merely some examples of the preferable sulfonic acid (3), and the preferred sulfonic acid (3) is not limited thereto.
Also, these sulfonic acids (3) may be used alone or in combination of two or more.
Among the examples, the sulfonic acid having a hydroxyl group is preferably at least one selected from the group consisting of 2-hydroxyethanesulfonic acid, 3-hydroxypropanesulfonic acid, hydroxybenzenesulfonic acid and hydroxy (methyl) benzenesulfonic acid.
In addition, in the case where the polyisocyanate composition of the present embodiment contains two or more amine salts of sulfonic acids, the sulfonic acids (3) may be the same as or different from each other.
Further, the sulfonic acid used for the polyisocyanate containing a sulfonic acid anion group in the molecule may form a salt with the amine compound described later.

(Sulfonic acid (4))

In the case where the active hydrogen group is an amino group, examples of the sulfonic acid having an amino group include a compound represented by the following general formula (4) (hereinafter, abbreviated as "sulfonic acid (4)").

[Chemical formula 11]

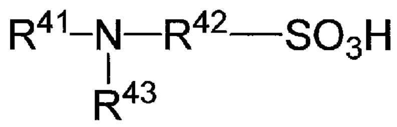

(4)

In formula (4), $R^{41}$ and $R^{43}$ are each independently a hydrogen atom or a hydrocarbon group having 1 to 12 carbon atoms which may contain a hydroxyl group. $R^{41}$ and $R^{43}$ may be the same as or different from each other. At least one of $R^{41}$ and $R^{43}$ is a hydrogen atom. $R^{42}$ is a hydrocarbon group having 1 to 12 carbon atoms which may contain a hydroxyl group.

• $R^{41}$ and $R^{43}$

In the general formula (4), $R^{41}$ and $R^{43}$ are each independently a hydrogen atom or a hydrocarbon group having 1 to 12 carbon atoms which may contain a hydroxyl group. $R^{41}$ and $R^{43}$ may be the same as or different from each other. At least one of $R^{41}$ and $R^{43}$ is a hydrogen atom. That is, in the case where $R^{41}$ is a hydrocarbon group having 1 to 12 carbon atoms which may contain a hydroxyl group, $R^{43}$ is a hydrogen atom, and in the case where $R^{43}$ is a hydrocarbon group having 1 to 12 carbon atoms which may contain a hydroxyl group, $R^{41}$ is a hydrogen atom. In addition, either of $R^{41}$ and $R^{43}$ may be a hydrogen atom.
The hydrocarbon group having 1 to 12 carbon atoms may be a monovalent aliphatic hydrocarbon group having 1 to 12 carbon atoms and may also be a monovalent aromatic hydrocarbon group having 6 to 12 carbon atoms. The monovalent aliphatic hydrocarbon group having 1 to 12 carbon atoms is preferably a chain alkyl group having 1 to 6 carbon atoms or a cyclic alkyl group having 3 to 6 carbon atoms. The chain alkyl group having 1 to 6 carbon atoms may be linear or branched.
Among the examples, $R^{41}$ and $R^{43}$ are preferably a hydrogen atom, a chain alkyl group having 1 to 6 carbon atoms, or a cyclic alkyl group having 3 to 6 carbon atoms.

•$R^{42}$

$R^{42}$ is a hydrocarbon group having 1 to 12 carbon atoms which may contain a hydroxyl group.
The hydrocarbon group having 1 to 12 carbon atoms may be a divalent aliphatic hydrocarbon group having 1 to 12 carbon atoms and may also be a divalent aromatic hydrocarbon group having 6 to 12 carbon atoms. The divalent aliphatic hydrocarbon group having 1 to 12 carbon atoms is preferably a chain alkylene group having 1 to 12 carbon atoms. The chain alkyl group having 1 to 12 carbon atoms may be linear or branched.
Among the examples, $R^{42}$ is preferably a divalent chain alkylene group having 1 to 6 carbon atoms, or a divalent aromatic hydrocarbon group having 6 to 10 carbon atoms (arylene group).
Preferable examples of the sulfonic acid (4) include 2-aminoethanesulfonic acid, 3-aminopropanesulfonic acid, 2-methylaminoethanesulfonic acid, 3-methylaminopropanesulfonic acid, 2-cyclohexylaminoethanesulfonic acid, 3-cyclohexylaminopropanesulfonic acid, 3-cyclohexylaminoisobutylsulfonic acid, 4-cyclohexylaminobutanesulfonic acid, 2-cyclohexylmethylaminoethanesulfonic acid, 3-cyclohexylmethylaminopropanesulfonic acid, 3-Cyclohexylmethylaminoisobutylsulfonic acid, 4-cyclohexylmethylaminobutanesulfonic acid, 2-methylcyclohexylaminoethanesulfonic acid, 3-methylcyclohexylaminopropanesulfonic acid, 3-methylcyclohexylaminoisobutylsulfonic acid, 4-methylcyclohexylaminobutanesulfonic acid, 2-dimethylcyclohexylaminoethanesulfonic acid, 3-dimethylcyclohexylaminopropanesulfonic acid, 3-dimethylcyclohexylaminoisobutylsulfonic acid, 4-dimethylcyclohexylaminobutanesulfonic acid, 2-trimethylcyclohexylaminoethanesulfonic acid, 3-trimethylcyclohexylaminopropanesulfonic acid, 3-trimethylcyclohexylaminoisobutylsulfonic acid, 4-trimethylcyclohexylamino butanesulfonic acid, 2-aminobenzenesulfonic acid, 3-aminobenzenesulfonic acid, 4-aminobenzenesulfonic acid, 2-(methylamino) benzenesulfonic acid, 3-(methylamino) benzenesulfonic acid, 4-(methylamino) benzenesulfonic acid, amino-methylbenzenesulfonic acid, amino-dimethylbenzenesulfonic acid, aminonaphthalenesulfonic acid.
In addition, these compounds are merely some examples of the preferred sulfonic acid (4), and the preferred sulfonic acid (4) is not limited thereto.
In addition, these sulfonic acids (4) may be used alone or in combination of two or more.
Among the examples, the sulfonic acid having an amino group is preferably at least one selected from the group consisting of 2-cyclohexylaminoethanesulfonic acid, 3-cyclohexylaminopropanesulfonic acid, 4-cyclohexylaminobutanesulfonic acid, 3-cyclohexylmethylaminopropanesulfonic acid, 3-(p-methylcyclohexylamino) propanesulfonic acid, 3-(3,3,5-trimethylcyclohexylamino) propanesulfonic acid, 4-(p-methylcyclohexylamino) butanesulfonic acid, 2-aminobenzenesulfonic acid, 2-amino-5-methylbenzenesulfonic acid, 2-amino-3,5-dimethylbenzenesulfonic acid, 5-amino-2-methylbenzenesulfonic acid (4-aminotoluene-2-sulfonic acid), 4-amino-2-methylbenzenesulfonic acid (5-aminotoluene-2-sulfonic acid) and 2-aminonaphthalene-4-sulfonic acid.

In addition, in the case where the polyisocyanate composition of the present embodiment contains two or more amine salts of sulfonic acids, the sulfonic acids (4) may be the same as or different from each other.

<Amine Compound>

The polyisocyanate composition of the present embodiment includes at least one tertiary ammonium cation of the amine compound (1) and at least one tertiary ammonium cation of the amine compound (2), or includes two or more tertiary ammonium cations of the amine compounds (1) having different total carbon numbers of $R^{11}$, $R^{12}$ and $R^{13}$.

[Chemical formula 12]

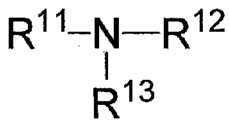

(1)

In formula (1), $R^{11}$, $R^{12}$ and $R^{13}$ are each independently a hydrocarbon group having 1 to 6 carbon atoms which may contain an ether bond. At least one selected from the group consisting of $R^{11}$, $R^{12}$ and $R^{13}$ may contain a ring structure, and two or more selected from the group consisting of $R^{11}$, $R^{12}$ and $R^{13}$ may be bonded to each other to form a ring structure. The ring structure may be an aromatic ring, a cycloalkyl group having 5 or 6 carbon atoms, a 5-membered or 6-membered ring in which $R^{11}$ and $R^{12}$ are bonded to each other, or a multi-membered multiple ring in which $R^{11}$, $R^{12}$ and $R^{13}$ are bonded to each other. The total carbon number of $R^{11}$, $R^{12}$ and $R^{13}$ is 8 or less.

[Chemical formula 13]

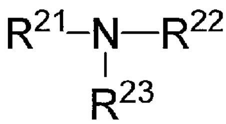

(2)

In formula (2), $R^{21}$, $R^{22}$ and $R^{23}$ are each independently a hydrocarbon group having 1 to 19 carbon atoms which may contain an ether bond. At least one selected from the group consisting of $R^{21}$, $R^{22}$ and $R^{23}$ may contain a ring structure, and two or more selected from the group consisting of $R^{21}$, $R^{22}$ and $R^{23}$ may be bonded to each other to form a ring structure. The ring structure may be an aromatic ring, a cycloalkyl group having 5 or 6 carbon atoms, a 5-membered or 6-membered ring in which $R^{21}$ and $R^{22}$ are bonded to each other, or a multi-membered multiple ring in which $R^{21}$, $R^{22}$ and $R^{23}$ are bonded to each other. The total carbon number of $R^{21}$, $R^{22}$ and $R^{23}$ is 9 or more.

The terms "tertiary ammonium cation of the amine compound (1)" and "tertiary ammonium cation of the amine compound (2)" as used herein refer to a cation protonated by coordinating a proton (H +) to "N" in the amine compound (1) and the amine compound (2).

In addition, in the polyisocyanate composition of the present embodiment, the amine compound (1) and the amine compound (2) may form a salt with the sulfonic acid.

[Amine Compound (1)]

($R^{11}$, $R^{12}$ and $R^{13}$)

In the general formula (1), $R^{11}$, $R^{12}$ and $R^{13}$ are each independently a hydrocarbon group having 1 to 6 carbon atoms which may contain an ether bond. $R^{11}$, $R^{12}$ and $R^{13}$ may be the same as or different from each other.

The total carbon number of $R^{11}$, $R^{12}$ and $R^{13}$ is 8 or less. That is, the total carbon number of $R^{11}$, $R^{12}$ and $R^{13}$ is 3 or more and 8 or less.

The hydrocarbon group having 1 to 6 carbon atoms may be a monovalent aliphatic hydrocarbon group having 1 to 6 carbon atoms, and may also be a monovalent aromatic hydrocarbon group having 6 carbon atoms. The monovalent aliphatic hydrocarbon group having 1 to 6 carbon atoms is preferably a chain alkyl group having 1 to 6 carbon atoms or a cyclic alkyl group having 3 to 6 carbon atoms. The chain alkyl group having 1 to 6 carbon atoms may be linear or branched.

Preferable examples of the amine compound (1) include those shown in the following (a) to (d). These compounds are merely some examples of the preferred amine compound (1), and the preferred amine compound (1) is not limited thereto.

(a) Tertiary amines having a chain aliphatic hydrocarbon group such as trimethylamine, N, N-dimethylethylamine, N, N-dimethylpropylamine, N, N-dimethylisopropylamine, N, N-dimethylbutylamine, N, N-dimethylisobutylamine, N, N-dimethylpentylamine, N, N-dimethylhexylamine, N, N-diethylmethylamine, triethylamine, N, N-diethylpropylamine, N, N-diethylisopropylamine, N, N-diethylbutylamine, N, N-diethyl isobutylamine, N, N-diisopropylmethylamine, N, N-diisopropylethylamine, N, N-dimethylallylamine, N-methyldiallylamine.

(b) tertiary amines having a cyclic aliphatic hydrocarbon group such as N, N-dimethylcyclohexylamine;

(c) tertiary amines having an aromatic hydrocarbon group such as N, N-dimethylphenylamine;

(d) cyclic amines such as N-methylpyrrolidine, N-ethyl pyrrolidine, N-propyl pyrrolidine, N-butyl pyrrolidine, N-methyl piperidine, N-ethyl piperidine, N-propyl piperidine, N-methyl morpholine, N-ethyl morpholine, N-propyl morpholine, N-butyl morpholine, N-sec-butyl morpholine, N-tert-butyl morpholine, N-isobutyl morpholine, quinuclidine.

In addition, these amine compounds may be used alone or in combination of two or more.

Among the examples, the amine compound (1) is preferably at least one selected from the group consisting of a cyclic amine compound, an amine compound containing a chain aliphatic hydrocarbon group, and an amine compound containing a cyclic aliphatic hydrocarbon group.

In addition, among the examples, the amine compound (1) is more preferably at least one selected from the group consisting of N, N-dimethylbutylamine, N, N-diethylmethylamine, triethylamine, N, N-diisopropylethylamine, N, N-dimethylcyclohexylamine, N-methyl piperidine, N-methyl morpholine, N-ethyl piperidine, N-ethyl morpholine and N-isobutyl morpholine.

In addition, among the examples, the amine compound (1) is even more preferably at least one selected from the group consisting of N, N-diethylmethylamine, triethylamine, N, N-diisopropylethylamine, N, N-dimethylcyclohexylamine, N-methyl piperidine, N-methyl morpholine and N-methylpyrrolidine. The salts using these amine compounds tend to further improve the emulsifying power.

[Amine Compound (2)]

($R^{21}$, $R^{22}$ and $R^{23}$)

In the general formula (2), $R^{21}$, $R^{22}$ and $R^{23}$ are each independently a hydrocarbon group having 1 to 19 carbon atoms which may contain an ether bond. $R^{21}$, $R^{22}$ and $R^{23}$ may be the same as or different from each other.

In addition, the total carbon number of $R^{21}$, $R^{22}$ and $R^{23}$ is 9 or more. That is, the total carbon number of $R^{21}$, $R^{22}$ and $R^{23}$ is 9 or more and 57 or less.

The hydrocarbon group having 1 to 19 carbon atoms may be a monovalent aliphatic hydrocarbon group having 1 to 19 carbon atoms, and may also be a monovalent aromatic hydrocarbon group having 6 to 19 carbon atoms. The monovalent aliphatic hydrocarbon group having 1 to 19 carbon atoms is preferably a chain alkyl group having 1 to 19 carbon atoms or a cyclic alkyl group having 3 to 19 carbon atoms. In the case of a chain alkyl group having 1 to 19 carbon atoms, it may be a group containing an aromatic hydrocarbon as a part of the alkyl group. The chain alkyl group having 1 to 19 carbon atoms may be linear or branched.

Preferable examples of the amine compound (2) include those shown in the following (e) to (g). These compounds are merely some examples of the preferable amine compound (2), and the preferable amine compound (2) is not limited thereto.

(e) Tertiary amines having a chain aliphatic hydrocarbon group such as N, N-dimethylheptylamine, N, N-dimethyloctylamine, N, N-dimethyl-2-ethylhexylamine, N, N-dimethylnonylamine, N, N-dimethyldecylamine, N, N-dimethylundecylamine, N, N-dimethyldodecylamine, N, N-dimethyltridecylamine, N, N-dimethylstearylamine, N, N-diethylpentylamine, N, N-diethylhexylamine, N, N-diethylheptylamine, N, N-diethyloctylamine, N, N-diethyl-2-ethylhexylamine, N, N-diethyl nonyl amine, N, N-diethyldecylamine, N, N-diethylundecylamine, N, N-diethyldodecylamine, N,

N-diethyl tridecyl amine, N, N-diethylstearylamine, tripropylamine, N, N-diisopropylbutylamine, N, N-diisopropyl-2-ethylhexylamine, N, N-dibutylmethylamine, N, N-dibutylethylamine, N, N-dibutylpropylamine, tributylamine, N, N-dibutylpentylamine, N, N-dibutylhexylamine, N, N-dibutylheptylamine, N, N-dibutyloctylamine, N, N-dibutyl-2-ethylhexylamine, N, N-dibutyl nonyl amine, N, N-dibutyldecylamine, N, N-dibutylundecylamine, N, N-dibutyldodecylamine, N, N-dibutyltridecylamine, N, N-dibutylstearylamine, triamylamine, trihexylamine;

(f) tertiary amines having a cyclic aliphatic hydrocarbon group such as N, N-diethylcyclohexylamine, N, N-dicyclohexylmethylamine, N, N-dicyclohexylethylamine, tricyclohexylamine;

(g) tertiary amines having an aromatic hydrocarbon group such as N, N-dimethylbenzylamine, N, N-diethylbenzylamine, N, N-dibenzylmethylamine, tribenzylamine, N, N-dimethyl-4-methylbenzylamine, N, N-dimethylphenylamine, N, N-diethylphenylamine, N, N-diphenylmethylamine.

In addition, these amine compounds may be used alone or in combination of two or more.
Among the examples, the amine compound (2) is preferably at least one selected from the group consisting of an amine compound containing a chain aliphatic hydrocarbon group and an amine compound containing a cyclic aliphatic hydrocarbon group.
In addition, among the examples, the amine compound (2) is more preferably at least one selected from the group consisting of N, N-dimethyl-2-ethylhexylamine, N, N-diisopropyl-2-ethylhexylamine, tripropylamine, tributylamine, N, N-diethylcyclohexylamine, N, N-dicyclohexylmethylamine, N, N-dimethylbenzylamine, N, N-diethylbenzylamine and N, N-diethylbenzylamine.
In addition, among the examples, the amine compound (2) is even more preferably at least one selected from the group consisting of N, N-diisopropyl-2-ethylhexylamine, tripropylamine, tributylamine, N, N-dicyclohexylmethylamine and N, N-dicyclohexylmethylamine. The salts using these amine compounds tend to further improve compatibility with polyisocyanate and increase the pot life.
In addition, the polyisocyanate composition of the present embodiment may include at least one tertiary ammonium cation of the amine compound (1) and at least one tertiary ammonium cation of the amine compound (2), or may include at least two tertiary ammonium cations of the amine compounds (1) having different total carbon numbers of $R^{11}$, $R^{12}$ and $R^{13}$.
In addition, in the polyisocyanate composition of the present embodiment, in the case where at least one tertiary ammonium cation of the amine compound (1) and at least one tertiary ammonium cation of the amine compound (2) are included, the molar ratio between the amine compound (1) and the amine compound (2) is preferably 10/90 to 90/10, more preferably 20/80 to 80/20, and even more preferably 30/70 to 70/30.
In addition, in the polyisocyanate composition of the present embodiment, in the case where at least two tertiary ammonium cations of the amine compounds (1) having different total carbon numbers of $R^{11}$, $R^{12}$ and $R^{13}$ are included, it is preferable to include an amine compound (1) in which the total carbon number of $R^{11}$, $R^{12}$ and $R^{13}$ is 6 or less and an amine compound (1) in which the total carbon number of $R^{11}$, $R^{12}$ and $R^{13}$ is 7 or more. Further, it is more preferable to include an amine compound (1) in which the total carbon number of $R^{11}$, $R^{12}$ and $R^{13}$ is 5 or less and an amine compound (1) in which the total carbon number of $R^{11}$, $R^{12}$ and $R^{13}$ is 7 or more. Furthermore, it is even more preferable to include an amine compound (1) in which the total carbon number of $R^{11}$, $R^{12}$ and $R^{13}$ is 5 or less and an amine compound (1) in which the total carbon number of $R^{11}$, $R^{12}$ and $R^{13}$ is 8.

<Method for Producing Amine Salt of Sulfonic Acid>

In the case where the sulfonic acid forms a salt with the above-described amine compound, that is, in the case of an amine salt of a sulfonic acid, it can be obtained by, for example, mixing a sulfonic acid having an active hydrogen group and an amine compound to bring about a neutralization reaction.
The neutralization reaction may be carried out in advance before reacting with the polyisocyanate, or carried out simultaneously with the reaction with the polyisocyanate. Alternatively, it may be carried out by reacting the polyisocyanate with the sulfonic acid having an active hydrogen group, followed by adding an amine compound.
In the case where the active hydrogen group is a hydroxyl group, the neutralization reaction is preferably carried out in advance before reacting with the polyisocyanate. In the case where the active hydrogen group is an amino group, the neutralization reaction is preferably carried out simultaneously with the reaction with the polyisocyanate, or carried out in the manner that the amine compound is added after the polyisocyanate and the sulfonic acid having an active hydrogen group are reacted,.
In the case where the active hydrogen group is a hydroxyl group, in the neutralization reaction, the mixing ratio of the sulfonic acid having a hydroxyl group and the amine compound is such that the molar ratio of the sulfonic acid/amine compound having a hydroxyl group is 0.5 to 2, and more preferably 0.8 to 1.5.

In the case where the neutralization reaction is carried out in advance, although the temperature and the time can be appropriately determined according to the progress of the reaction, in general, the temperature is preferably approximately 0 °C to 100 °C, and the mixing time is approximately 10 minutes 24 hours.

A solvent used in the preparation of the amine salt of the sulfonic acid having an active hydrogen group is preferably water or a hydrophilic solvent. Although the hydrophilic solvent is not particularly limited, examples thereof include alcohols, ether alcohols, ketones, amide solvents. These solvents may be used alone or in combination.

As the alcohols, for example, methanol, ethanol, propanol, butanol, isopropanol can be mentioned.

As the ether alcohols, for example, ethylene glycol monomethyl ether, ethylene glycol monoethyl ether, ethylene glycol monobutyl ether, diethylene glycol monoethyl ether, diethylene glycol monobutyl ether, propylene glycol monomethyl ether, propylene glycol monoethyl ether, dipropylene glycol monomethyl ether can be mentioned.

As the ketones, for example, acetone, methyl ethyl ketone, methyl isobutyl ketone can be mentioned.

As the amide solvents, N, N-dimethylformamide, N, N-dimethylacetamide can be mentioned.

It is preferable to remove the water or the hydrophilic solvent after the neutralization reaction.

<Properties of Polyisocyanate Composition>

From the viewpoint of the emulsifiability and the coating film physical properties, the isocyanate group is preferably modified with a sulfonic acid having an active hydrogen group at a ratio of 0.25 to 50 mol, more preferably 0.5 to 20 mol, and even more preferably 1 to 10 mol, with respect to 100 mol of the isocyanate group of the raw material polyisocyanate.

In addition, from the viewpoint of the solvent resistance of the coating film, the content of the isocyanate group of the polyisocyanate composition of the present embodiment is preferably 10 to 25% by mass, and more preferably 15 to 24% by mass when the nonvolatile content is 100% by mass. Although the method for controlling the content of the isocyanate group within the above range is not particularly limited, a method of controlling the proportion ratio of the sulfonic acid and the polyisocyanate can be mentioned as an example.

In addition, the number-average molecular weight of the polyisocyanate (including the polyisocyanate containing a sulfonic acid anion group in the molecule and the unreacted polyisocyanate) used in the polyisocyanate composition of the present embodiment is preferably 450 to 2,000, more preferably 500 to 1,800, and even more preferably 550 to 1,550 from the viewpoint of the solvent resistance of the coating film. Although the method of controlling the number-average molecular weight within the above range is not particularly limited, a method of controlling the proportion ratio of the sulfonic acid, the amine compound and the polyisocyanate can be mentioned as an example.

In addition, the average number of the functional groups of the polyisocyanate (including the modified polyisocyanate and the unreacted polyisocyanate) used in the polyisocyanate composition of the present embodiment is preferably 1.8 to 6.2, more preferably 2.0 to 5.6, and even more preferably 2.5 to 4.6 from the viewpoint of the solvent resistance of the coating film and the retention ratio of the isocyanate group. Although the method for controlling the average number of the functional groups within the above range is not particularly limited, a method of controlling the proportion ratio of the sulfonic acid, the amine compound and the polyisocyanate can be mentioned as an example.

In addition, in the present embodiment, the isocyanate group content, the nonvolatile content, the number-average molecular weight and the average functional group number can be measured by the methods described in Examples below.

<Other Ingredients>

The polyisocyanate composition of the present embodiment is a composition including the above-described polyisocyanate containing the sulfonic acid anion group in the molecule, unreacted polyisocyanate and at least two tertiary ammonium cations of the amine compounds. The polyisocyanate composition of the present embodiment may include other components in addition to the above-described polyisocyanate containing the sulfonic acid anion group in the molecule, unreacted polyisocyanate, and at least two tertiary ammonium cations of the amine compounds. Although the said other components are not particularly limited, examples thereof include a solvent, an antioxidant, a light stabilizer, a polymerization inhibitor, a surfactant.

As the solvent used in the polyisocyanate composition of the present embodiment, a hydrophilic solvent may be used, and a hydrophobic solvent may also be used. These solvents may be used alone or in combination.

Although the hydrophobic solvent is not particularly limited, examples thereof include a mineral spirit, solvent naphtha, LAWS (Low Aromatic White Spirit), HAWS (High Aromatic White Spirit), toluene, xylene, cyclohexane, esters, ketones and amides.

Examples of the esters include ethyl acetate, butyl acetate.

Examples of the ketones include acetone, methyl ethyl ketone, methyl isobutyl ketone, cyclohexanone.

Examples of the amides include N, N-dimethylformamide, N, N-dimethylacetamide.

Although the hydrophilic solvent is not particularly limited, examples thereof include alcohols, ethers, and esters of ether alcohols.

Examples of the alcohols include methanol, ethanol, propanol, isopropanol, 2-ethylhexanol.

Examples of the ethers include diethylene glycol dimethyl ether, diethylene glycol diethyl ether, diethylene glycol dibutyl ether, dipropylene glycol dimethyl ether.

Examples of the esters of ether alcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, dipropylene glycol monomethyl ether acetate.

In the polyisocyanate composition of the present embodiment, the content of the solvent is preferably 0 to 90% by mass, more preferably 0 to 50% by mass, and even more preferably 0 to 30% by mass with respect to the total amount of the polyisocyanate composition of the present embodiment.

Examples of the antioxidant and the light stabilizer include those shown in the following (a) to (e). These examples may be contained alone or in combination of two or more.

(a) Aliphatic, aromatic or alkyl group-substituted aromatic esters of phosphoric acid or phosphorous acid, and hypophosphorous acid derivatives;
(b) phosphorus compounds such as phenylphosphonic acid, phenylphosphinic acid, diphenylphosphonic acid, polyphosphonate, dialkyl pentaerythritol diphosphite, dialkyl bisphenol A diphosphite;
(c) phenolic derivatives (particularly hindered phenol compounds);
(d) sulfur-containing compounds such as a thioether-based compound, dithioate salt-based compound, mercaptobenzimidazole-based compound, thiocarbanilide-based compound, thiodipropionic acid ester;
(e) tin-based compounds such as sumerate, dibutyltin monoxide

Examples of the polymerization inhibitor include hydroquinones, phenols, cresols, catechols, benzoquinones. Specific examples of the polymerization inhibitor include benzoquinone, p-benzoquinone, p-toluquinone, p-xyloquinone, naphthoquinone, 2,6-dichloroquinone, hydroquinone, trimethylhydroquinone, catechol, p-t-butyl catechol, 2,5-di-t-butylhydroquinone, monomethylhydroquinone, p-methoxyphenol, 2,6-di-t-butyl-p-cresol, hydroquinone monomethyl ether. These examples may be contained alone or in combination of two or more.

Examples of the surfactant include known anionic surfactants, cationic surfactants, amphoteric surfactants.

In the polyisocyanate composition of the present embodiment, the total content of the antioxidant, light stabilizer, polymerization inhibitor and the surfactant is preferably 0 to 10% by mass, more preferably 0 to 5% by mass, and even more preferably 0 to 2% by mass with respect to the total amount of the polyisocyanate composition of the present embodiment.

«Method for Producing Polyisocyanate Composition»

The method for producing the polyisocyanate composition of the present embodiment preferably includes, for example, a step of (A) mixing and reacting two or more amine salts of a sulfonic acid having an active hydrogen group with a polyisocyanate.

Alternatively, the method for producing the polyisocyanate composition of the present embodiment preferably includes, for example, a step (B) of mixing and reacting a sulfonic acid having an active hydrogen group, a polyisocyanate, at least one amine compound (1) and at least one amine compound (2), or mixing and reacting a sulfonic acid having an active hydrogen group, a polyisocyanate, and at least two amine compounds (1) having different total carbon numbers of $R^{11}$, $R^{12}$ and $R^{13}$.

In step (A), it is preferable that the amine salt of the sulfonic acid be added to the polyisocyanate after being adjusted in advance.

In step (B), the sulfonic acid having an active hydrogen group and the amine compounds may be simultaneously added to the polyisocyanate, or may be added in order.

In particular, in the case where the active hydrogen group is a hydroxyl group, step (A) is preferable, and it is more preferable that the amine salt of the sulfonic acid be added to the polyisocyanate after being adjusted in advance.

In addition, in particular, in the case where the active hydrogen group is an amino group, step (B) is preferable.

In the reaction step, the mixing ratio of the sulfonic acid having an active hydrogen group or amine salt thereof to the polyisocyanate is preferably such that the molar ratio of isocyanate group/active hydrogen group is 2 to 400, more preferably 5 to 200, and even more preferably 10 to 100 from the viewpoint of the emulsifiability and the coating film physical properties.

In the reaction step, although the reaction temperature and the reaction time can be appropriately determined according to the progress of the reaction, the reaction temperature is preferably 0 °C to 150 °C, and the reaction time

is preferably 30 minutes to 48 hours.

In addition, in the reaction step, ordinary and known catalysts may be used in some cases. Although the catalyst is not particularly limited, examples thereof include those shown in the following (a) to (e). These examples may be used alone or in combination.

(a) Organotin compounds such as tin octoate, tin 2-ethyl-1-hexanoate, tin ethyl caproate, tin laurate, tin palmitate, butyl tin oxide, dibutyltin dichloride, dibutyltin diacetate, dibutyltin dimaleate, dibutyltin dilaurate, dioctyltin diacetate, dioctyltin dilaurate;

(b) organic zinc compounds such as zinc chloride, zinc octoate, zinc 2-ethyl-1-hexanoate, zinc 2-ethylcaproate, zinc stearate, zinc naphthenate, zinc acetylacetonate; or organic titanium compounds;

(c) organic zirconium compounds;

(d) tertiary amines such as triethylamine, tributylamine, N, N-diisopropylethylamine, N, N-dimethylethanolamine;

(e) diamines such as triethylenediamine, tetramethylethylenediamine, 1,4-diazabicyclo [2.2.2] octane;

In the method for producing the polyisocyanate composition of the present embodiment, a solvent may be used or may not be used. The solvent used in the method for producing the polyisocyanate composition of the present embodiment may be a hydrophilic solvent or a hydrophobic solvent. As the hydrophilic solvent and the hydrophobic solvent, the same as those exemplified above for the other components can be mentioned.

In addition, in the method for producing the polyisocyanate composition of the present embodiment, at least one selected from the group consisting of an antioxidant, a light stabilizer, a polymerization inhibitor and a surfactant may be used in addition to the sulfonic acid having an active hydrogen group, the polyisocyanate and the amine compound. As the antioxidant, light stabilizer, polymerization inhibitor and surfactant, the same as those exemplified for the other components above can be mentioned.

<< Coating Composition >>

The coating composition of the present embodiment includes the polyisocyanate composition described above.

Although the coating composition of the present embodiment may be used as an organic solvent-based coating composition, it is preferable to be used as an aqueous coating composition in which resins as coating film-forming components are dissolved or dispersed in a medium mainly containing water. In particular, it may also be used for coating materials for buildings, coating materials for automobiles, coating materials for automobile repair, coating materials for plastic, pressure-sensitive adhesives, adhesives, building materials, household aqueous coating materials, other coating agents, sealing agents, ink, casting materials, elastomers, forms, plastic raw materials, and fiber treatment agents.

<Resins>

Although the resins as the main component are not particularly limited, examples thereof include acrylic resins, polyester resins, polyether resins, epoxy resins, fluorine resins, polyurethane resins, polyvinylidene chloride copolymer, polyvinyl chloride copolymer, vinyl acetate copolymer, acrylonitrile butadiene copolymer, polybutadiene copolymer, styrene butadiene copolymer.

Among the examples, acrylic resins or polyester resins are preferable as the resins.

(Acrylic resins)

Although the acrylic resins are not particularly limited, examples thereof include acrylic resins obtained by polymerizing a single or a mixture of polymerizable monomers selected from the monomers shown in the following (a) to (e). These acrylic resins may be used alone or in combination.

(a) (Meth) acrylic acid esters such as (meth) acrylate, ethyl (meth) acrylate, isopropyl (meth) acrylate, (meth) acrylate, n-butyl (meth) acrylate, 2-ethylhexyl (meth) acrylate, lauryl (meth) acrylate ;
(b) (meth) acrylic acid esters having an active hydrogen such as (meth) acrylic acid-2-hydroxyethyl, (meth)acrylic acid-2-hydroxypropyl, (meth) acrylic acid-2-hydroxybutyl, (meth) acrylic acid-3-hydroxypropyl, (meth) acrylic acid-4-hydroxybutyl ;
(c) unsaturated carboxylic acids such as acrylic acid, methacrylic acid, maleic acid, itaconic acid;

(d) unsaturated amides such as acrylamide, N-methylol acrylamide, diacetone acrylamide;
(e) other polymerizable monomers such as glycidyl methacrylate, styrene, vinyl toluene, vinyl acetate, acrylonitrile, dibutyl fumarate, p-styrene sulfonic acid, allyl sulfosuccinic acid.

As a polymerization method thereof, although the emulsion polymerization is generally used, suspension polymerization, dispersion polymerization, solution polymerization may also be used. In the emulsion polymerization, it is also possible to perform stepwise polymerization.

(Polyester resins)

Although the polyester resins are not particularly limited, examples thereof include polyester resins obtained by performing a condensation reaction of a single or mixture of carboxylic acids with a single or mixture of polyhydric alcohols.
As the carboxylic acid, for example, succinic acid, adipic acid, sebacic acid, dimer acid, maleic anhydride, phthalic anhydride, isophthalic acid, terephthalic acid, trimellitic acid, pyromellitic acid can be mentioned.
As the polyhydric alcohol, for example, diols, triols, tetraols can be mentioned.
As the diols, ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, 2,2-diethyl-1,3-propanediol can be mentioned.
As the triols, for example, glycerin, trimethylol propane can be mentioned.
As the tetraols, for example, diglycerin, dimethylol propane, pentaerythritol can be mentioned.
Alternatively, for example, polycaprolactones obtained by performing a ring-opening polymerization of ε-caprolactone onto a hydroxyl group of a low-molecular-weight polyol can also be used as the polyester resins.

(Polyether resins)

Examples of the polyether resins include those shown in the following (a) to (d).

(a) Polyether polyols obtained by adding a single or a mixture of alkylene oxides to a single or a mixture of polyvalent hydroxy compounds using a strongly basic catalyst.
Examples of the polyvalent hydroxy compound include those shown in the following (i) to (vi).

(i) Diglycerin, ditrimethylolpropane, pentaerythritol, dipentaerythritol

(ii) sugar alcohol-based compounds such as erythritol, D-threitol, L-arabinitol, ribitol, xylitol, sorbitol, mannitol, galactitol, ramnitol;

(iii) monosaccharides such as arabinose, ribose, xylose, glucose, mannose, galactose, fructose, sorbose, rhamnose, fucose, ribosease;

(iv) disaccharides such as trehalose, sucrose, maltose, cellobiose, gentiobiose, lactose, melibiose;

(v) trisaccharides such as raffinose, gentianose, melezitose;

(vi) tetrasaccharides such as stachyose.

As the strongly basic catalyst, for example, a hydroxide of lithium, sodium, potassium, an alcoholate, an alkyl amine can be mentioned.
As the alkylene oxide, for example, ethylene oxide, propylene oxide, butylene oxide, cyclohexene oxide, styrene oxide can be mentioned.
(b) Polyether polyols obtained by reacting a polyamine compound with an alkylene oxide.
Examples of the polyamine compound include ethylenediamines.
(c) Polyether polyols obtained by performing a ring-opening polymerization of a cyclic ether.
Examples of the cyclic ether include tetrahydrofuran.
(d) So-called polymer polyols obtained by polymerizing an acrylamide using the polyether polyols obtained in (a) to

(c) as a medium.

In addition, in the coating composition of the present embodiment, these resins may be used in combination with resins such as a melamine-based curing agent, a urethane dispersion, a urethane acrylic emulsion according to need.
In addition, it is preferable that these resins be emulsified, dispersed or dissolved in water. For this reason, it is possible to neutralize the carboxyl group, sulfonic group contained in the resin.
Although the neutralizing agent for neutralizing the carboxyl group, sulfonic group is not particularly limited, examples thereof include ammonia, a water-soluble amino compound.
As the water-soluble amino compound, for example, monoethanolamine, ethylamine, dimethylamine, diethylamine, triethylamine, propyl amine, dipropylamine, isopropylamine, diisopropylamine, triethanolamine, butylamine, dibutylamine, 2-ethylhexylamine, ethylenediamine, propylene diamine, methylethanolamine, dimethylethanolamine, diethylethanolamine, morpholine can be mentioned. These examples may be used alone or in combination of two or more.
Among the examples, the neutralizing agent is preferably a tertiary amine, more preferably triethylamine or dimethylethanolamine.

<Other Ingredients>

In addition to the above-described polyisocyanate composition and resins, the coating composition of the present embodiment may further include inorganic pigments, organic pigments, extender pigments, silane coupling agents, titanium coupling agents, organophosphates, organic phosphites, thickeners, leveling agents, thixotizing agents, antifoaming agents, freezing stabilizers, matting agents, crosslinking reaction catalysts (a catalyst for curing promotion), skinning-preventing agents, dispersants, wetting agents, fillers, plasticizers, lubricants, reducing agents, preservatives, mildewproofing agents, deodorants, anti-yellowing agents, ultraviolet absorbers, antistatic agents or charge control agents, sedimentation-preventing agents which are generally added to coating materials.
Examples of the catalysts for curing promotion include those shown in the following (a) or (b), but are not limited to them.

(a) Metal salts such as dibutyltin dilaurate, tin 2-ethylhexanoate, zinc 2-ethylhexanoate, cobalt salt;
(b) tertiary amines such as triethylamine, pyridine, methyl pyridine, benzyl dimethyl amine, N, N-dimethylcyclohexyl amine, N-methyl piperidine, pentamethyldiethylene triamine, N, N'-endethylene piperazine, N, N'-dimethylpiperazine.

The coating composition of the present embodiment may further include a surfactant in addition to the above-described polyisocyanate composition and resins in order to improve the dispersibility in the coating material.
The coating composition of the present embodiment may further include an antioxidant, a light stabilizer, or a polymerization inhibitor in addition to the above-described polyisocyanate composition and resins in order to improve the storage stability of the paint.

<<Coated Substrate>>

The coated substrate of the present embodiment is a coated substrate coated with the above-described coating composition. The coated substrate of the present embodiment preferably has a coating layer containing the above-described coating composition.
The coated substrate of the present embodiment may include a desired substrate and optionally a conventional primer prior to the coating.
Examples of the substrate include metals, wood, glass, stones, ceramic materials, concrete, rigid and flexible plastics, fiber products, leather products, paper.

[Example]

Hereinafter, the present embodiment will be described in more detail with reference to Examples and Comparative Examples, but unless the gist thereof is exceeded, it is to be understood that the present invention is not limited to the following examples and comparative examples. Physical properties and evaluation of the polyisocyanate composition in Examples and Comparative Examples were measured as follows. In addition, "parts" and "%" mean "parts by mass" and "% by mass" unless otherwise stated.

<Measurement Method>

[Physical Property 1] Nonvolatile content

Each of the polyisocyanate compositions obtained in Examples and Comparative Examples was used as a sample. When dilution with a solvent was done, the nonvolatile content was calculated by the following method. First, a mass of an aluminum cup was accurately weighed, and approximately 1 g of the sample was collected therein to accurately weigh the cup prior to heat drying. Then, the cup containing the sample was heated in a dryer at 105 °C for 3 hours. After that, the cup subjected to heat drying was cooled to room temperature, and the mass of the cup was accurately weighed again. Next, the mass% of the dry residue in the sample which was determined as the nonvolatile content was calculated by the following calculation equation (A) as the nonvolatile content.
In addition, when dilution with a solvent was not done, the nonvolatile content was assumed to be substantially 100%.

$$\text{Nonvolatile content [mass\%]} = (\text{mass of cup after heat drying} - \text{mass of aluminum cup}) / (\text{mass of cup before heat drying} - \text{mass of aluminum cup}) \times 100\% \qquad (A)$$

[Physical Property 2] Isocyanate group content

Each of the polyisocyanate compositions obtained in Examples and Comparative Examples was used as a sample, and the isocyanate group content was measured according to the method described in JIS K 7301-1995 (Testing method for tolylene diisocyanate type prepolymer for thermosetting urethane elastomer). The method for measuring isocyanate group content will be more specifically described below.
(1) 1 g of the sample was collected in a 200 mL conical flask, and 20 mL of toluene was added into the flask to dissolve the sample.
(2) Thereafter, 20 mL of a 2.0 N di-n-butylamine-toluene solution was added into the flask, and then the flask was allowed to stand for 15 minutes.
(3) 70 mL of 2-propanol was added into the flask and dissolved to obtain a solution.
(4) The solution obtained in the above (3) was titrated with 1 mol/L hydrochloric acid to determine the titration amount of the sample.
(5) A blank titration amount was obtained by carrying out the above-described steps (1) to (3) without adding the sample.

From the sample titration amount and the blank titration amount obtained above, the isocyanate group content was calculated by the following calculation equation (B).

$$\text{Isocyanate group content [mass\%]} = (\text{blank titration amount} - \text{sample titration amount}) \times 42 / [\text{mass of sample (1 g)} \times 1{,}000] \times 100\% \qquad (B)$$

[Physical Property 3] Modification rate

The modification rate is a ratio of the amount of the isocyanate group modified with the sulfonic acid or amine salt thereof to 100 mol of the isocyanate group of the polyisocyanate raw material. Each of the polyisocyanate compositions obtained in Examples and Comparative Examples was used as a sample, and the modification rate was determined from the peak area ratio of the unmodified isocyanurate trimer, the mono-modified isocyanurate trimer, the double-modified isocyanurate trimer, and the triple-modified isocyanurate trimer at 220 nm of liquid chromatography (LC). The apparatus and conditions used were as follows.
LC apparatus: manufactured by Waters Corporation, UPLC (trade name),
Column: manufactured by Waters Co., Ltd., ACQUITY UPLC HSS T3 1.8 μm C18, inner diameter of 2.1 mm × length of 50 mm
Flow rate: 0.3 mL/min
Mobile phase: A = 10 mM aqueous solution of ammonium acetate, B = acetonitrile
Gradient condition: The initial mobile phase composition was A/B = 98/2, the ratio of B was linearly increased after injection of the sample and reached to A/B = 0/100 after 10 minutes.
Detection method: photodiode array detector, measurement wavelength is 220 nm

[Physical Property 4] Sulfur atom content per total amount (100% by mass) of polyisocyanate composition

Each of the polyisocyanate compositions obtained in Examples and Comparative Examples was used as a sample, and the sulfur atom content derived from the sulfonic acid anion group in the polyisocyanate composition was determined by ion chromatography (IC) using the following apparatus and conditions.

IC device: manufactured by Thermo Fisher Scientific Co., ICS-1500 (trade name)

Column: AS 12 A
Mobile phase: 2.7 mmol/L $Na_2CO_3$, 0.3 mmol/L $NaHCO_3$
Flow rate: 1.5 mL/min
Sample injection volume: 1 mL
Suppressor: AERS-500
Detector: Electrical conductivity detector
Pretreatment method: the sample was burned in a furnace, and the combustion gas thereof was absorbed by the absorption liquid.

[Physical Property 5] Qualitative analysis of amine compound

Amine compounds contained in the modified polyisocyanates obtained in Examples and Comparative Examples were qualitatively analyzed based on the measurement of mass spectrometry after separation by pyrolysis gas chromatography using the following apparatus and conditions.
Pyrolyzer: FRONTIER LAB Py 3030 D
Heating temperature: 600 °C
Heating atmosphere: He
GC/MS apparatus: Agilent 6890/MSD 5975 C
Column: DB-1
Column temperature: 40 °C (5 minutes) → temperature rising at 20 °C/min → 300 °C (holding for 11 minutes)
Column flow rate: 1.0 mL/min
Inlet temperature: 320 °C
Injection method: split method (split ratio: 1/50)
Ion source temperature: 230 °C
Interface temperature: 300 °C
Ionization method: Electron ionization method
Sample amount: 0.3 mg

[Evaluation 1] Yellowish color evaluation of polyisocyanate composition

Each of the polyisocyanate compositions obtained in Examples and Comparative Examples was used as a sample, and the yellowish color of the polyisocyanate composition was evaluated by a light transmittance value at a wavelength of 430 nm using the following apparatus and conditions.
Apparatus: JASCO Corporation, V-650 (trade name)
Cell: 2 cm square glass cell

The criteria for judgment were as follows.

(Determination criteria)

○: 80% or more

×: less than 80%

[Evaluation 2] Turbidity evaluation of polyisocyanate composition

Each of the polyisocyanate compositions obtained in Examples and Comparative Examples was used as a sample, and the turbidity of the polyisocyanate composition was evaluated based on the haze value using the following apparatus and conditions.

Apparatus: manufactured by HACH Corporation, turbidity meter 2100 N (trade name)
Standard solution: formazine standard solution
Mode: ratio mode

The determination criteria were as follows.

(Determination criteria)

○: less than 1 NTU
×: 1 NTU or more

[Evaluation 3] Evaluation of emulsifying power of polyisocyanate composition

Each of the polyisocyanate compositions obtained in Examples and Comparative Examples was used as a sample, and the emulsifying power was evaluated by the following method.

(1) Masses of a 100 mL flask and a Yoshino paper were measured.
(2) 16 g of the polyisocyanate composition in terms of solid content was collected in a 100 mL flask, and 24 g of deionized water was added thereto.
(3) After stirring the resulting solution in the 100 mL flask at 200 rpm for 3 minutes using a propeller feather, the solution was filtered with the Yoshino paper weighed in (1).
(4) The filtration residue remaining in the Yoshino paper and the residue remaining in the 100 mL flask were combined and heated in a dryer at 105 °C for 1 hour to obtain the total mass (g) thereof.
(5) The proportion of the polyisocyanate composition dispersed in water was determined by the following calculation equation (C).

Proportion of the polyisocyanate composition dispersed in water (% by mass)

= {1- [total mass (g) of the 100 mL flask containing the residue and Yoshino paper obtained in (4) - total mass (g) of 100 mL flask and Yoshino paper measured in (1)] / [mass (g) of the composition containing the modified polyisocyanate collected in (2) × nonvolatile content (% by mass)]} × 100%     (C)

The determination criteria were as follows.

(Determination criteria)

○: 80 mass% or more
Δ: 60% by mass or more and less than 80% by mass
×: less than 60% by mass

[Evaluation 4] Appearance evaluation of coating film

Each of the coating compositions obtained in Examples and Comparative Examples was coated on a glass plate to obtain a coating film having a thickness of 40 μm. Thereafter, the coating film was dried under an atmosphere of 23 °C/50% RH, and on the next day, the obtained coating film was visually evaluated. The determination criteria were as follows.

(Judgment criteria)

○: Transparent or no craters
Δ: Slight turbidity or a few craters
×: Turbidity or many craters

[Evaluation 5] Hardness evaluation of coating film

Each of the coating compositions obtained in Examples and Comparative Examples was used coated on a glass plate to obtain a coating film having a thickness of 40 μm. Thereafter, the coating film was dried in an atmosphere of 23 °C/50% RH, and on the next day, the obtained coating film was measured using a König hardness tester (manufactured by BYK Garder, trade name "Pendulum hardness tester"). The determination criteria were as follows.

(Determination criteria)

○: 40 or more
×: less than 40

[Evaluation 6] Retention ratio of isocyanate group

The concentration change of the isocyanate group in each of the coating compositions obtained in Examples and Comparative Examples was calculated by the following method. Specifically, in the infrared absorption spectrum measurement (detector: TGS, integration number: 16 times, decomposition: 4 $cm^{-1}$) using FT/IR-4200 type A (trade name) manufactured by JASCO Corporation, the concentration change was calculated from the intensity ratio of the isocyanate absorption peak (near the wavenumber of 2271 $cm^{-1}$) to the isocyanurate absorption peak (around the wavenumber of 1686 $cm^{-1}$). In addition, immediately after the preparation of each coating composition was set to 0 hours, the absorption peak intensity of isocyanate / the absorption peak intensity of isocyanurate = X0 at that time, and the peak intensity ratio after n hours = Xn were obtained. Subsequently, the retention of isocyanate groups was calculated using the following formula (D), and the time capable of retaining 80% or more of the isocyanate groups was evaluated.

$$\text{Retention rate of isocyanate group} = Xn / X0 \qquad (D)$$

The determination criteria were as follows.

(Determination criteria)

○: 3.5 hours or more
Δ: 3 hours or more, less than 3.5 hours
×: Less than 3 hours

[Production Example 1] Production of amine salt of sulfonic acid 1

10 parts by mass of 1-propanol was added to 20 parts by mass of 70 mass% aqueous solution of 2-hydroxyethanesulfonic acid and stirred to obtain a solution. Further, triethylamine was weighed so that the molar ratio to 2-hydroxyethanesulfonic acid was 1, and diluted with 10 parts by mass of 1-propanol. Subsequently, a dilute solution of triethylamine was added dropwise to the stirring 2-hydroxyethanesulfonic acid solution. After 1 hour from the start of the dropwise addition, stirring was stopped, and dehydration and solvent removal were carried out by an evaporator to obtain a triethylamine salt of 2-hydroxyethanesulfonic acid having a solid content of 99.8% by mass.

[Production Example 2] Production of amine salt of sulfonic acid 2

2-Hydroxyethanesulfonic acid N, N-diisopropylethylamine salt having a solid content of 99.8% by mass was obtained in the same manner as in Production Example 1 except that N, N-diisopropylethylamine was used in place of triethylamine.

[Production Example 3] Preparation of amine salt of sulfonic acid 3

2-Hydroxyethanesulfonic acid N, N-dimethylcyclohexylamine salt having a solid content of 99.7% by mass was obtained in the same manner as in Production Example 1 except that N, N-dimethylcyclohexylamine was used in place of triethylamine.

[Production Example 4] Production of amine salt of sulfonic acid 4

2-Hydroxyethanesulfonic acid N-methylpiperidine salt having a solid content of 99.8% by mass was obtained in the same manner as in Production Example 1 except that N-methylpiperidine was used in place of triethylamine.

[Production Example 5] Production of amine salt of sulfonic acid 5

N-Methylmorpholine 2-hydroxyethanesulfonate having a solid content of 99.8% by mass was obtained in the same manner as in Production Example 1 except that N-methylmorpholine was used in place of triethylamine.

[Production Example 6] Production of Amine Salt of Sulfonic Acid 6

2-Hydroxyethanesulfonic acid N, N-dicyclohexylmethylamine salt having a solid content of 99.8% by mass was obtained in the same manner as in Production Example 1 except that N, N-dicyclohexylmethylamine was used in place of triethylamine.

[Production Example 7] Production of amine salt of sulfonic acid 7

2-Hydroxyethanesulfonic acid tributylamine salt having a solid content of 99.8% by mass was obtained in the same manner as in Production Example 1 except that tributylamine was used in place of triethylamine.

[Production Example 8] Production of amine salt of sulfonic acid 8

2-Hydroxyethanesulfonic acid N, N-diisopropyl-2-ethylhexylamine salt having a solid content of 99.8% was obtained in the same manner as in Production Example 1 except that N, N-diisopropyl-2-ethylhexylamine was used in place of triethylamine.

[Production Example 9] Production of amine salt of sulfonic acid 9

10 parts by mass of 1-propanol was added to 20 parts by mass of 80 mass% aqueous solution of 3-hydroxypropanesulfonic acid and stirred to obtain a solution. Further, N, N-dimethylbenzylamine was weighed so that the molar ratio with respect to 3-hydroxypropanesulfonic acid was 1, and diluted with the same parts by mass of 1-propanol to obtain a solution, followed by adding dropwise the obtained solution to the stirring solution. After 1 hour from the start of the dropwise addition, the stirring was stopped, and the mixture was dehydrated and desolventized by an evaporator to obtain N, N-dimethylbenzylamine salt of 3-hydroxypropanesulfonic acid having a solid content of 99.8% by mass.

[Production Example 10] Production of amine salt of sulfonic acid 10

10 parts by mass of 1-propanol was added to 20 parts by mass of 2-hydroxyethanesulfonic acid 70 mass% aqueous solution and stirred to obtain a solution. Further, N, N-diethylmethylamine was weighed so that the molar ratio to 2-hydroxyethanesulfonic acid was 0.33, and triethylamine was added so that the molar ratio to 2-hydroxyethanesulfonic acid was 0.67 Propylamine was weighed and diluted with 15 parts by weight of 1-propanol. Then, a diluted solution of N, N-diethylmethylamine and tripropylamine was added dropwise to the stirring 2-hydroxyethanesulfonic acid solution. After 1 hour from the start of the dropwise addition, stirring was stopped, and the mixture was dehydration and solvant removal were carried out by an evaporator to obtain a mixed salt of N, N-diethylmethylamine and tripropylamine 2-hydroxyethanesulfonic acid having a solid content of 99.6% by mass.

[Production Example 11] Production of acrylic polyol aqueous dispersion 1

As a reactor, a four-necked separable flask equipped with a stirrer, a thermometer, a reflux condenser, a nitrogen blowing tube and a dropping funnel was used. The interior of the reactor was brought to a nitrogen atmosphere and 300 parts by mass of ethylene glycol monobutyl ether was charged and the temperature inside the reactor was maintained at 80 °C with stirring. A mixture obtained by uniformly mixing the following components (a-1) to (c-1) was continuously added to the reactor at a constant rate over 4.5 hours.
(a-1) MonomeR$^{11}$46.3 parts by mass of methyl methacrylate
(a-2) MonomeR$^{21}$05 parts by mass of styrene
(a-3) MonomeR$^{42}$57.6 parts by mass of n-butyl acrylate
(a-4) Monomer 5: 14 parts by mass of methacrylic acid
(a-5) Monomer 6: 177.1 parts by mass of 2-hydroxyethyl methacrylate
(b-1) Polymerization Initiator: 0.7 parts by mass of 2,2'-azobisisobutyronitrile
(c-1) Chain transfer agent: 0.3 parts by mass of n-dodecyl mercaptan

Thereafter, the internal temperature of the reactor was kept at 80 °C for 2 hours. Thereafter, the mixture in the reactor was cooled, 11.6 parts by mass of a 25% by mass aqueous solution of ammonia was added thereto, and the mixture was stirred for 15 minutes. Further, 1300 parts by mass of ion-exchanged water was added to the mixture in the reactor to obtain an aqueous dispersion while stirring. The obtained aqueous dispersion was concentrated using a rotary evaporator until the solid content was about 45% by mass. Thereafter, the obtained concentrate was adjusted to pH 8.0 with a 25% by mass aqueous solution of ammonia to obtain an aqueous dispersion of acrylic polyol. In the obtained aqueous dispersion of the acrylic polyol, the average particle diameter of the particles in the aqueous dispersion was 90 nm. The hydroxyl group concentration of the polyol resin content was 3.3% by mass calculated from the charged raw material. The number-average molecular weight of the polyol resin component was 9600.

[Example 1] Production of Polyisocyanate Composition and Coating Composition

(1) Production of Polyisocyanate Composition

To 100 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 2.5 parts by mass of 2-hydroxyethanesulfonic acid triethylamine salt obtained in Production Example 1 and 3.5 parts by mass of 2-hydroxyethanesulfonic acid N, N-dicyclohexylmethylamine salt obtained in Production Example 6 were added, and the resulting mixture was stirred at 120 °C under a nitrogen atmosphere for 3 hours to carry out a reaction so that the molar ratio of each amine was 1/1 and the molar ratio of isocyanate group to hydroxyl group (isocyanate group / hydroxyl group) was 25.

After completion of the reaction, a polyisocyanate composition was obtained. The obtained polyisocyanate composition had a nonvolatile content of 100% by mass, an isocyanate group content rate of 20.8% by mass, a modification rate of 4.0%, and a sulfur atom content of 0.7%. Each physical property is also shown in Table 1.

(2) Production of coating composition

40 g of the polyol aqueous dispersion prepared in Production Example 11 was weighed and stored in a container. Subsequently, the polyisocyanate composition was added so that the molar ratio of the isocyanate groups in the polyisocyanate composition obtained in (1) to the hydroxyl groups in the polyol aqueous dispersion was NCO / OH = 1.25 to obtain a mixture. Next, deionized water was added to the obtained mixture so that the solid content in the coating composition was 42% by mass, and the mixture was stirred at 600 rpm for 10 minutes using a propeller feather to prepare a coating composition. The obtained coating composition was used to prepare a coating film by the method described above and evaluated. The results are shown in Table 2.

[Examples 2 to 6] Production of Polyisocyanate Composition and Coating Composition

(1) Production of Polyisocyanate Composition

Polyisocyanate compositions were obtained in the same manner as in Example 1 except that the formulations and the amine molar ratios in the amine salt of a sulfonic acid shown in Table 1 were used. Physical properties of the obtained polyisocyanate compositions were measured using the method described above. The results are shown in Table 1.

(2) Production of coating composition

Coating compositions were obtained in the same manner as in Example 1 except that each of the polyisocyanate compositions obtained in (1) was used in place of the polyisocyanate composition obtained in Example 1. The obtained coating composition was used to prepare a coating film by the method described above and evaluated. The results are shown in Table 2.

[Example 7] Production of polyisocyanate composition and coating composition

(1) Production of polyisocyanate composition

To 100 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 5.2 parts by weight of 3-cyclohexylaminopropanesulfonic acid, 0.7 parts by weight of N, N-diethylmethylamine and 2.0 parts by weight of N, N-dimethylcyclohexylamine were added, and the resulting mixture was stirred at 80 °C at reflux under a nitrogen atmosphere for 5 hours to carry out a reaction so that the molar ratio of the isocyanate group to the amino group (isocyanate group / amino group) was 22, thereby obtaining a polyisocyanate composition. Physical properties of the obtained polyisocyanate composition were measured using the method described above. The results are shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Example 8] Production of polyisocyanate composition and coating composition

(1) Production of polyisocyanate composition

To 130 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 9.8 parts by weight of 4-cyclohexylaminobutanesulfonic acid, 1.8 parts by weight of N-methylpyrrolidine and 2.7 parts by weight of N, N-diisopropylethylamine were added, and the resulting mixture was stirred at

100 °C at reflux under a nitrogen atmosphere for 5 hours to carry out a reaction. Thereafter, 60 parts by mass of TPA-100 was further added and finally reacted so that the molar ratio of the isocyanate group to the amino group (isocyanate group / amino group) was 25 to obtain a polyisocyanate composition. Physical properties of the obtained polyisocyanate composition were measured using the method described above. The results are shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Comparative Example 1] Production of polyisocyanate composition and coating composition

(1) Production of polyisocyanate composition

To 100 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 5.0 parts by mass of 2-hydroxyethanesulfonic acid triethylamine salt prepared in Preparation Example 1, 20 parts by mass of acetone and 0.005 parts by mass of dibutyltin dilaurate were added and the resulting mixture was stirred at 70 °C at reflux under a nitrogen atmosphere for 10 hours to carry out a reaction so that the molar ratio of the isocyanate groups to the hydroxyl groups (isocyanate group / hydroxyl group) was 25. Thereafter, the reflux was removed and the reaction was continued by stirring at 100 °C for 1 hour. After completion of the reaction, a polyisocyanate composition was obtained. The obtained polyisocyanate composition had a nonvolatile content of 98.5% by mass, an isocyanate group content rate of 20.7% by mass, a modification rate of 4.0%, and a sulfur atom content of 0.7%. Each physical property is also shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Comparative Example 2] Production of polyisocyanate composition and coating composition

(1) Production of polyisocyanate composition

To 100 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass), a solution prepared by previously dissolving 4.2 parts by mass of 2-hydroxyethanesulfonic acid N, N-diisopropylethylamine salt obtained in Production Example 2 in 10 parts by mass of acetone was added. Subsequently, the resulting mixture was stirred at 120 °C at reflux under a nitrogen atmosphere for 3 hours to carry out a reaction so that the molar ratio of isocyanate group to hydroxyl group (isocyanate group / hydroxyl group) was 33, thereby obtaining a polyisocyanate composition. Physical properties of the obtained polyisocyanate composition were measured using the method described above. The results are shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Comparative Example 3] Production of polyisocyanate composition and coating composition

(1) Production of Polyisocyanate Composition

To 100 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 5.5 parts by mass of N, N-dimethylcyclohexylamine salt of 2-hydroxyethanesulfonic acid obtained in Production Example 3 was added. Subsequently, the resulting mixture was stirred at 120 °C under a nitrogen atmosphere for 3 hours to carry out a reaction so that the molar ratio of isocyanate group to hydroxyl group (isocyanate group / hydroxyl group) was 25, thereby obtaining a polyisocyanate composition. Physical properties of the obtained polyisocyanate composition were measured using the method described above. The results are shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Comparative Examples 4 to 5] Production of polyisocyanate composition and coating composition

(1) Production of polyisocyanate composition

Polyisocyanate compositions were obtained in the same manner as in Comparative Example 3, except that the formulations shown in Table 1 were used. Physical properties of the obtained polyisocyanate compositions were measured using the method described above. The results are shown in Table 1.

(2) Production of coating composition

Coating compositions were obtained in the same manner as in Example 1 except that each of the polyisocyanate compositions obtained in (1) was used in place of the polyisocyanate composition obtained in Example 1. The obtained coating composition was used to prepare a coating film prepared by the method described above and evaluated. The results are shown in Table 2.

[Comparative Example 6] Production of polyisocyanate composition and coating composition

(1) Production of polyisocyanate composition

To 100 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 5.0 parts by weight of 3-cyclohexylaminopropane sulfonic acid and 2.9 parts by weight of N, N-dimethylcyclohexylamine were added. Subsequently, the resulting mixture was stirred at 80 °C at reflux under a nitrogen atmosphere for 5 hours to carry out a reaction so that the molar ratio of isocyanate group to isocyanate group (isocyanate group / amino group) was 23, thereby obtaining a polyisocyanate composition. Physical properties of the obtained polyisocyanate composition were measured using the method described above. The results are shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Comparative Example 7] Production of polyisocyanate composition and coating composition

(1) Production of polyisocyanate composition

To 130 parts by mass of an isocyanate prepolymer having an isocyanurate structure (manufactured by Asahi Kasei Chemicals Corporation, trade name "Duranate TPA-100" (isocyanate group content: 23% by mass, nonvolatile content: 100% by mass)), 10.0 parts by weight of 4-cyclohexylaminobutanesulfonic acid and 5.4 parts by weight of N, N-dimethylcyclohexylamine were added. Subsequently, the resulting mixture was stirred at 100 °C at reflux under a nitrogen atmosphere for 5 hours to carry out a reaction, and 60 parts by mass of TPA-100 was further added so that the final molar ratio of isocyanate groups to the amino groups (isocyanate group / amino group) was 24, thereby obtaining a polyisocyanate composition. Physical properties of the obtained polyisocyanate composition were measured using the method described above. The results are shown in Table 1.

(2) Production of coating composition

A coating composition was obtained in the same manner as in Example 1 except that the polyisocyanate composition obtained in (1) was used in place of the polyisocyanate composition obtained in Example 1. The obtained coating composition was used to prepare a coating film by the method described above and evaluated. The results are shown in Table 2.

[Table 1]

| | Polyisocyanate | | Ammonium sulfonate/Sulfonic acid and amine compound | | | | | | Molar ratio of amine compounds (having 8 or less of C / having 9 or more of C) | Physical properties of polyisocyanate composition | | | | | |
|---|---|---|---|---|---|---|---|---|---|---|---|---|---|---|---|
| Polyisocyanate composition | Compound | Part by weight | Compound 1 | Part by weight | Compound 2 | Part by weight | Compound 3 | Part by weight | | (Physical property 1) Nonvolatile content (mass%) | (Physical property 2) Isocyanate group content ratio (mass%) | (Physical property 3) Modification rate (mass%) | (Physical property 4) Sulfur content ratio (mass%) | (Physical property 5) Detected amine | |
| Ex. 1 | TPA-100 | 100 | Prod. Ex. 1 | 2.5 | Prod. Ex. 6 | 3.5 | - | - | 1.0 | 100 | 20.8 | 4.0 | 0.7 | triethyl amine | N, N-dicyclohexylmethyl amine |
| Ex. 2 | TPA-100 | 100 | Prod. Ex. 2 | 4.2 | Prod. Ex. 6 | 1.8 | - | - | 3.0 | 100 | 20.8 | 4.0 | 0.7 | N, N-diisopropylethyl amine | N, N-dicyclohexylmethyl amine |
| Ex. 3 | TPA-100 | 100 | Prod. Ex. 3 | 4.2 | Prod. Ex. 7 | 1.7 | - | - | 3.0 | 100 | 20.8 | 4.0 | 0.7 | N, N-dimethylcyclohexyl amine | tributyl amine |
| Ex. 4 | TPA-100 | 100 | Prod. Ex. 4 | 2.5 | Prod. Ex. 8 | 1.9 | - | - | 2.0 | 100 | 21.3 | 3.0 | 0.5 | N-methylpiperidine | N, N-diisopropyl 2-ethylhexyl amine |
| Ex. 5 | TPA-100 | 100 | Prod. Ex. 5 | 1.2 | Prod. Ex. 6 | 5.3 | - | - | 0.5 | 100 | 20.7 | 4.0 | 0.7 | N-methylmorpholine | N, N-dicyclohexylmethyl amine |
| Ex. 6 | TPA-100 | 100 | Prod. Ex. 10 | 6.2 | - | - | - | - | 0.5 | 100 | 20.7 | 4.5 | 0.7 | N, N-diethylmethyl amine | tripropyl amine |
| Ex. 7 | TPA-100 | 95 | 3-cyclohexylamino propane sulfonic acid | 5.2 | N, N-diethyl methyl amine | 0.7 | N, N-dimethyl cyclohexyl amine | 2.0 | - | 100 | 20.3 | 4.5 | 0.7 | N, N-diethylmethyl amine | N, N-dimethylcyclohexyl amine |
| Ex. 8 | TPA-100 | 190 | 4-cyclohexylamino butane sulfonic acid | 9.8 | N-methyl pyrrolidine | 1.8 | N, N-diisopropyl ethyl amine | 2.7 | - | 100 | 20.5 | 4.0 | 0.7 | N-methylpyrrolidine | N, N-diisopropylethyl amine |
| Comp. Ex. 1 | TPA-100 | 100 | Prod. Ex. 1 | 5.0 | - | - | - | - | - | 98.5 | 20.7 | 4.0 | 0.7 | triethylamine | - |
| Comp. Ex. 2 | TPA-100 | 100 | Prod. Ex. 2 | 4.2 | - | - | - | - | - | 99.2 | 21.2 | 3.0 | 0.5 | N, N-diisopropylethyl amine | - |
| Comp. Ex. 3 | TPA-100 | 100 | Prod. Ex. 3 | 5.5 | - | - | - | - | - | 100 | 20.9 | 4.0 | 0.7 | N, N-dimethylcyclohexyl amine | - |
| Comp. Ex. 4 | TPA-100 | 100 | Prod. Ex. 9 | 7.1 | - | - | - | - | - | 100 | 20.4 | 5.0 | 0.8 | N, N-dimethylbenzyl amine | - |
| Comp. Ex. 5 | TPA-100 | 100 | Prod. Ex. 8 | 9.3 | - | - | - | - | - | 100 | 20.0 | 5.0 | 0.8 | N, N-diisopropyl 2-ethylhexyl amine | - |
| Comp. Ex. 6 | TPA-100 | 95 | 3-cyclohexylamino propane sulfonic acid | 5.0 | N, N-dimethyl cyclohexyl amine | 2.9 | - | - | - | 100 | 20.3 | 4.4 | 0.7 | N, N-dimethylcyclohexyl amine | - |
| Comp. Ex. 7 | TPA-100 | 190 | 4-cyclohexylamino butane sulfonic acid | 10.0 | N, N-dimethyl cyclohexyl amine | 5.4 | - | - | - | 100 | 20.5 | 4.1 | 0.7 | N, N-dimethylcyclohexyl amine | - |

[Table 2]

| | Evaluation of polyisocyanate composition | | | Evaluation of coating composition | | |
|---|---|---|---|---|---|---|
| Polyisocyanate composition | (Evaluation 1) Yellowish color | (Evaluation 2) Turbidity | (Evaluation 3) Emulsifying power | (Evaluation 4) Appearance of coating film | (Evaluation 5) Hardness of coating film | (Evaluation 6) Retention ratio of isocyanate group |
| Ex. 1 | ○ | ○ | ○ | ○ | ○ | ○ |
| Ex. 2 | ○ | ○ | ○ | ○ | ○ | ○ |
| Ex. 3 | ○ | ○ | ○ | ○ | ○ | ○ |
| Ex. 4 | ○ | ○ | ○ | ○ | ○ | ○ |
| Ex. 5 | ○ | ○ | ○ | ○ | ○ | ○ |
| Ex. 6 | ○ | ○ | ○ | ○ | ○ | ○ |
| Ex. 7 | ○ | ○ | ○ | Δ (a few craters) | ○ | ○ |
| Ex. 8 | ○ | ○ | ○ | Δ (a few craters) | ○ | ○ |
| Comp. Ex. 1 | × | ○ | ○ | Δ (slight turbidity) | ○ | × |
| Comp. Ex. 2 | × | × | ○ | ○ | ○ | ○ |
| Comp. Ex. 3 | ○ | × | ○ | ○ | ○ | Δ |
| Comp. Ex. 4 | ○ | ○ | ○ | Δ (a few craters) | × | ○ |
| Comp. Ex. 5 | ○ | ○ | ○ | Δ (a few craters) | × | ○ |
| Comp. Ex. 6 | ○ | ○ | △ | × (many craters) | ○ | Δ |
| Comp. Ex. 7 | ○ | ○ | △ | × (many craters) | ○ | Δ |

As shown in Table 1 and Table 2, the polyisocyanate compositions of Examples 1 to 6, in which polyisocyanates containing a sulfonic acid anion group in the molecule obtained by reacting two kinds of amine salts of a sulfonic acid with a polyisocyanate were included and two types of amine compounds were detected, showed less yellowish color and turbidity and excellent emulsifying power. In addition, coating compositions containing these polyisocyanate compositions showed good pot life (retention of isocyanate groups). In addition, the coating film using these coating compositions had a good appearance and hardness.

In addition, the polyisocyanate compositions of Examples 7 and 8, in which polyisocyanates containing a sulfonic acid anion group in the molecule obtained by reacting a sulfonic acid, a polyisosianate with two types of amine compounds were included and two kinds of amine compounds were detected, showed less yellowish color and turbidity and excellent emulsifying power. In addition, coating compositions containing these polyisocyanate compositions showed good pot life (retention of isocyanate groups). In addition, the coating film using these coating compositions had a good appearance as well as hardness.

On the other hand, the polyisocyanate compositions of Comparative Examples 1 to 5, including a polyisocyanate containing a sulfonic acid anion group obtained by reacting one type of amine salt of a sulfonic acid with a polyisocyanate, in which one type of amine compound was detected, did not simultaneously show a good appearance (turbidity and yellowish color), good water dispersibility (emulsifying power), good coating film appearance, good coating film hardness, and good pot life (retention of isocyanate group).

In addition, the polyisocyanate compositions of Comparative Examples 6 and 7, including a polyisocyanate containing a sulfonic acid anion group in the molecule obtained by reacting a sulfonic acid, polyisocyanate and one type of amine compound, in which one type of amine compound was detected, did not simultaneously show a good appearance

(turbidity and yellow taste), good water dispersibility (emulsifying power), good appearance of coating film, good hardness of coating film, and good pot life (retention rate of isocyanate group).

From the above, it was confirmed that the polyisocyanate composition of the present embodiment has less turbidity and less yellowish color, and excellent emulsifying power. It was also confirmed that the coating composition obtained using the polyisocyanate composition of the present embodiment exhibited a good pot life, and that it was possible to form a coating film having an excellent appearance and excellent hardness.

INDUSTRIAL APPLICABILITY

The polyisocyanate composition of the present embodiment has less turbidity and yellowish color and can obtain an excellent dispersibility when dispersed in water or a main agent containing water. In addition, the polyisocyanate composition of the present embodiment exhibits a good pot life and can form a coating film having an excellent appearance and excellent hardness. The coating composition of the present embodiment can be suitably used for paints for buildings, paints for automobiles, paints for automobile repair, plastic paints, pressure-sensitive adhesives, adhesives, building materials, household water-based paints, other coating agents, sealing agents, ink, casting materials, elastomers, forms, plastic raw materials, and fiber treatment agents.

## Claims

1. A polyisocyanate composition, comprising
a polyisocyanate containing a sulfonic acid anion group in the molecule; and
at least one tertiary ammonium cation of an amine compound represented by the following general formula (1) and at least one tertiary ammonium cation of an amine compound represented by the following general formula (2), or at least two tertiary ammonium cations of the amine compounds represented by the general formula (1) having different total carbon numbers of $R^{11}$, $R^{12}$ and $R^{13}$,

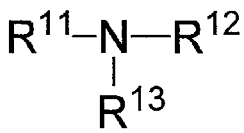

(1)

in formula (1), $R^{11}$, $R^{12}$ and $R^{13}$ are each independently a hydrocarbon group having 1 to 6 carbon atoms which may contain an ether bond, at least one of $R^{11}$, $R^{12}$ and $R^{13}$ may contain a ring structure, and two or more of $R^{11}$, $R^{12}$ and $R^{13}$ may be bonded to each other to form a ring structure, the ring structure is an aromatic ring, a cycloalkyl group having 5 or 6 carbon atoms, a 5-membered or 6-membered ring in which $R^{11}$ and $R^{12}$ are bonded to each other, or a multi-membered multiple ring in which $R^{11}$, $R^{12}$ and $R^{13}$ are bonded to each other, the total carbon number of $R^{11}$, $R^{12}$ and $R^{13}$ is 8 or less,

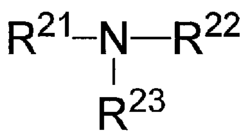

(2)

in formula (2), $R^{21}$, $R^{22}$ and $R^{23}$ are each independently a hydrocarbon group having 1 to 19 carbon atoms which may contain an ether bond, at least one of $R^{21}$, $R^{22}$ and $R^{23}$ may contain a ring structure, and two or more of $R^{21}$, $R^{22}$ and $R^{23}$ may be bonded to each other to form a ring structure, the ring structure may be an aromatic ring, a cycloalkyl group having 5 or 6 carbon atoms, a 5-membered or 6-membered ring in which $R^{21}$ and $R^{22}$ are bonded to each other, or a multi-membered multiple ring, in which $R^{21}$, $R^{22}$ and $R^{23}$ are bonded to each other, and the total carbon number of $R^{21}$, $R^{22}$ and $R^{23}$ is 9 or more.

2. The polyisocyanate composition according to claim 1, wherein
the polyisocyanate containing a sulfonic acid anion group in the molecule is one obtained by a reaction of two or more amine salts of a sulfonic acid having an active hydrogen group with a polyisocyanate, and
the amine salt of a sulfonic acid having an active hydrogen group is a salt of a sulfonic acid having an active hydrogen group with at least one amine compound represented by the general formula (1) and at least one amine compound

represented by the general formula (2), or a salt of a sulfonic acid having an active hydrogen group with at least two amine compounds represented the general formula (1).

3. The polyisocyanate composition according to claim 2, wherein the active hydrogen group is a hydroxyl group.

4. The polyisocyanate composition according to claim 2 or 3, wherein the sulfonic acid having an active hydrogen group is a compound represented by the following general formula (3),

$$HO\text{-}R^{31}\text{-}SO_3H \qquad (3)$$

in formula (3), $R^{31}$ is a hydrocarbon group having 1 to 10 carbon atoms which may contain at least one selected from the group consisting of a hydroxyl group, an ether bond, an ester bond, a carbonyl group and an imino group, $R^{31}$ may contain a ring structure, the ring structure is an aromatic ring, a 5-membered or 6-membered ring containing two nitrogen atoms, or a 5-membered or 6-membered ring containing a nitrogen atom and an oxygen atom.

5. The polyisocyanate composition according to claim 1, wherein the polyisocyanate containing a sulfonic acid anion group in the molecule is one obtained by a reaction of a sulfonic acid having an active hydrogen group with a polyisocyanate.

6. The polyisocyanate composition according to claim 5, wherein the active hydrogen group is an amino group.

7. The polyisocyanate composition according to claim 5 or 6, wherein the sulfonic acid having an active hydrogen group is a compound represented by the following general formula (4),

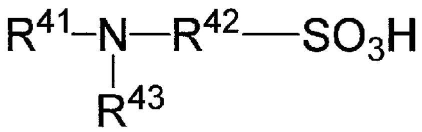

(4)

in formula (4), $R^{41}$ and $R^{43}$ are each independently a hydrogen atom or a hydrocarbon group having 1 to 12 carbon atoms which may contain a hydroxyl group, at least one of $R^{41}$ and $R^{43}$ is a hydrogen atom, $R^{42}$ is a hydrocarbon group having 1 to 12 carbon atoms which may contain a hydroxyl group.

8. The polyisocyanate composition according to any one of claims 1 to 7, wherein
the amine compound represented by the general formula (1) is at least one selected from the group consisting of a cyclic amine compound, an amine compound containing a chain aliphatic hydrocarbon group and an amine compound containing a cyclic aliphatic hydrocarbon group, and
the amine compound represented by the general formula (2) is at least one selected from the group consisting of an amine compound containing a chain aliphatic hydrocarbon group and an amine compound containing a cyclic aliphatic hydrocarbon group.

9. The polyisocyanate composition according to any one of claims 1 to 8, wherein
the polyisocyanate is at least one selected from the group consisting of an aliphatic polyisocyanate, an alicyclic polyisocyanate and an araliphatic polyisocyanate.

10. A method for producing a polyisocyanate composition, comprising

(A) reacting two or more of amine salts of a sulfonic acid having an active hydrogen group with a polyisocyanate, or
(B) reacting a sulfonic acid having an active hydrogen group, a polyisocyanate, at least one amine compound represented by the following general formula (1) and at least one amine compound represented by the following general formula (2), or reacting a sulfonic acid having an active hydrogen group, a polyisocyanate, and at least two amine compounds represented by the general formula (1) having different total carbon numbers of $R^{11}$, $R^{12}$ and $R^{13}$, wherein

the reaction is carried out at a molar ratio of isocyanate group/active hydrogen group of 2 to 400,
the amine salt of a sulfonic acid having an active hydrogen group is a salt of the sulfonic acid having an active hydrogen group with at least one amine compound represented by the general formula (1) and at least one amine

compound represented by the general formula (2), or a salt of the sulfonic acid having an active hydrogen group with at least two amine compounds represented by the general formula (1),

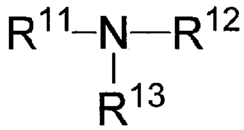

(1)

in formula (1), $R^{11}$, $R^{12}$ and $R^{13}$ are each independently a hydrocarbon group having 1 to 6 carbon atoms which may contain an ether bond, at least one of $R^{11}$, $R^{12}$ and $R^{13}$ may contain a ring structure, two or more of $R^{11}$, $R^{12}$ and $R^{13}$ may be bonded to each other to form a ring structure, the ring structure is an aromatic ring, a cycloalkyl group having 5 or 6 carbon atoms, a 5-membered or 6-membered ring in which $R^{11}$ and $R^{12}$ are bonded to each other, or a multi-membered multiple ring in which $R^{11}$, $R^{12}$ and $R^{13}$ are bonded to each other, and the total carbon number of $R^{11}$, $R^{12}$ and $R^{13}$ is 8 or less,

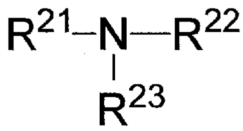

(2)

in formula (2), $R^{21}$, $R^{22}$ and $R^{23}$ are each independently a hydrocarbon group having 1 to 19 carbon atoms which may contain an ether bond, at least one of $R^{21}$, $R^{22}$ and $R^{23}$ may contain a ring structure, two or more of $R^{21}$, $R^{22}$ and $R^{23}$ may be bond to each other to form a ring structure, the ring structure is an aromatic ring, a cycloalkyl group having 5 or 6 carbon atoms, a 5-membered or 6-membered ring in which $R^{21}$ and $R^{22}$ are bonded to each other, or a multi-membered multiple ring in which $R^{21}$, $R^{22}$ and $R^{23}$ are bonded to each other, the total carbon number of $R^{21}$, $R^{22}$ and $R^{23}$ is 9 or more.

**11.** The method for producing a polyisocyanate composition according to claim 10, wherein the active hydrogen group is at least one selected from the group consisting of an amino group and a hydroxyl group.

**12.** The method for producing a polyisocyanate composition according to claim 10 or 11, wherein the sulfonic acid having an active hydrogen group is a compound represented by the following general formula (3),

$$HO\text{-}R^{31}\text{-}SO_3H \qquad (3)$$

in formula (3), $R^{31}$ is a hydrocarbon group having 1 to 10 carbon atoms which may contain at least one selected from the group consisting of a hydroxyl group, an ether bond, an ester bond, a carbonyl group and an imino group, $R^{31}$ may contain a ring structure, the ring structure is an aromatic ring, a 5-membered or 6-membered ring containing two nitrogen atoms, or a 5-membered or 6-membered ring containing a nitrogen atom and an oxygen atom.

**13.** The method for producing a polyisocyanate composition according to any one of claims 10 to 12, wherein in the amine salt of a sulfonic acid, the molar ratio between the amine compound represented by the general formula (1) and the amine compound represented by the general formula (2) is 10/90 to 90/10.

**14.** A coating composition comprising the polyisocyanate composition according to any one of claims 1 to 9.

**15.** A coated substrate coated with the coating composition according to claim 14.

## Patentansprüche

**1.** Polyisocyanatzusammensetzung, umfassend
ein Polyisocyanat, das eine Sulfonsäureaniongruppe im Molekül enthält; und
mindestens ein tertiäres Ammoniumkation einer Aminverbindung der folgenden allgemeinen Formel (1), und mindestens ein tertiäres Ammoniumkation einer Aminverbindung der folgenden allgemeinen Formel (2), oder mindestens zwei tertiäre Ammoniumkationen der Aminverbindungen der allgemeine Formel (1) mit unterschiedlichen Ge-

samtkohlenstoffzahlen von $R^{11}$, $R^{12}$ und $R^{13}$,

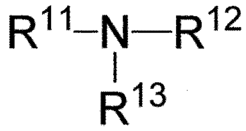

(1)

in Formel (1) sind $R^{11}$, $R^{12}$ und $R^{13}$ jeweils unabhängig voneinander eine Kohlenwasserstoffgruppe mit 1 bis 6 Kohlenstoffatomen, die eine Etherbindung enthalten kann, mindestens einer der Reste $R^{11}$, $R^{12}$ und $R^{13}$ kann eine Ringstruktur enthalten, und zwei oder mehrere der Reste $R^{11}$, $R^{12}$ und $R^{13}$ können unter Bildung einer Ringstruktur aneinander gebunden sein, wobei die Ringstruktur ein aromatischer Ring, eine Cycloalkylgruppe mit 5 oder 6 Kohlenstoffatomen, ein 5-gliedriger oder 6-gliedriger Ring, in dem $R^{11}$ und $R^{12}$ aneinander gebunden sind, oder ein mehrgliedriger Mehrfachring ist, in dem $R^{11}$, $R^{12}$ und $R^{13}$ aneinander gebunden sind, wobei die Gesamtkohlenstoffzahl von $R^{11}$, $R^{12}$ und $R^{13}$ 8 oder weniger beträgt,

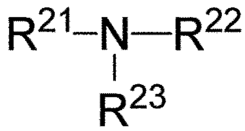

(2)

in Formel (2) sind $R^{21}$, $R^{22}$ und $R^{23}$ jeweils unabhängig voneinander eine Kohlenwasserstoffgruppe mit 1 bis 19 Kohlenstoffatomen, die eine Etherbindung enthalten kann, mindestens einer der Reste $R^{21}$, $R^{22}$ und $R^{23}$ kann eine Ringstruktur enthalten, und zwei oder mehrere der Reste $R^{21}$, $R^{22}$ und $R^{23}$ können unter Bildung einer Ringstruktur aneinander gebunden sein, wobei die Ringstruktur ein aromatischer Ring, eine Cycloalkylgruppe mit 5 oder 6 Kohlenstoffatomen, ein 5-gliedriger oder 6-gliedriger Ring, in dem $R^{21}$ und $R^{22}$ aneinander gebunden sind, oder ein mehrgliedriger Mehrfachring, in dem $R^{21}$, $R^{22}$ und $R^{23}$ aneinander gebunden sind, sein kann und die Gesamtkohlenstoffzahl von $R^{21}$, $R^{22}$ und $R^{23}$ 9 oder mehr beträgt.

**2.** Polyisocyanatzusammensetzung nach Anspruch 1, worin
das Polyisocyanat, das eine Sulfonsäureaniongruppe im Molekül enthält, durch eine Reaktion von zwei oder mehreren Aminsalzen einer Sulfonsäure mit einer aktiven Wasserstoffgruppe mit einem Polyisocyanat erhalten wird, und das Aminsalz einer Sulfonsäure mit einer aktiven Wasserstoffgruppe ein Salz einer Sulfonsäure mit einer aktiven Wasserstoffgruppe mit mindestens einer Aminverbindung der allgemeinen Formel (1) und mindestens einer Aminverbindung der allgemeinen Formel (2) oder ein Salz einer Sulfonsäure mit einer aktiven Wasserstoffgruppe mit mindestens zwei Aminverbindungen der allgemeinen Formel (1) ist.

**3.** Polyisocyanatzusammensetzung nach Anspruch 2, wobei die aktive Wasserstoffgruppe eine Hydroxylgruppe ist.

**4.** Polyisocyanatzusammensetzung nach Anspruch 2 oder 3, wobei die Sulfonsäure mit einer aktiven Wasserstoffgruppe eine Verbindung der folgenden allgemeinen Formel (3) ist,

$HO\text{-}R^{31}\text{-}SO_3H$ (3)

in Formel (3) ist $R^{31}$ eine Kohlenwasserstoffgruppe mit 1 bis 10 Kohlenstoffatomen, die mindestens eine Gruppe enthalten kann, die aus der aus einer Hydroxylgruppe, einer Etherbindung, einer Esterbindung, einer Carbonylgruppe und einer Iminogruppe bestehenden Gruppe ausgewählt ist, $R^{31}$ kann eine Ringstruktur enthalten, die ein aromatischer Ring, ein 5-gliedriger oder 6-gliedriger Ring, der zwei Stickstoffatome enthält, oder ein 5-gliedriger oder 6-gliedriger Ring ist, der ein Stickstoffatom und ein Sauerstoffatom enthält.

**5.** Polyisocyanatzusammensetzung nach Anspruch 1, wobei das Polyisocyanat, das eine Sulfonsäureaniongruppe im Molekül enthält, durch eine Reaktion einer Sulfonsäure mit einer aktiven Wasserstoffgruppe mit einem Polyisocyanat erhalten wird.

**6.** Polyisocyanatzusammensetzung nach Anspruch 5, wobei die aktive Wasserstoffgruppe eine Aminogruppe ist.

**7.** Polyisocyanatzusammensetzung nach Anspruch 5 oder 6, wobei die Sulfonsäure mit einer aktiven Wasserstoffgruppe eine Verbindung der folgenden allgemeinen Formel (4) ist,

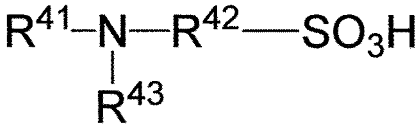

(4)

in Formel (4) sind $R^{41}$ und $R^{43}$ jeweils unabhängig voneinander ein Wasserstoffatom oder eine Kohlenwasserstoffgruppe mit 1 bis 12 Kohlenstoffatomen, die eine Hydroxylgruppe enthalten kann, mindestens einer der Reste $R^{41}$ und $R^{43}$ ist ein Wasserstoffatom, $R^{42}$ ist eine Kohlenwasserstoffgruppe mit 1 bis 12 Kohlenstoffatomen, die eine Hydroxylgruppe enthalten kann.

**8.** Polyisocyanatzusammensetzung nach einem der Ansprüche 1 bis 7, worin
die durch die allgemeine Formel (1) dargestellte Aminverbindung mindestens eine ist, die aus der Gruppe ausgewählt ist, die aus einer cyclischen Aminverbindung, einer Aminverbindung, die eine kettenförmige aliphatische Kohlenwasserstoffgruppe enthält, und einer Aminverbindung, die eine cyclische aliphatische Kohlenwasserstoffgruppe enthält,
besteht, und
wobei die durch die allgemeine Formel (2) dargestellte Aminverbindung mindestens eine ist, die aus der Gruppe ausgewählt ist, die aus einer Aminverbindung, die eine kettenförmige aliphatische Kohlenwasserstoffgruppe enthält, und einer Aminverbindung, die eine zyklische aliphatische Kohlenwasserstoffgruppe enthält, besteht.

**9.** Polyisocyanatzusammensetzung nach einem der Ansprüche 1 bis 8, worin
das Polyisocyanat mindestens eines ist, das aus der Gruppe ausgewählt ist, die aus einem aliphatischen Polyisocyanat, einem alicyclischen Polyisocyanat und einem araliphatischen Polyisocyanat besteht.

**10.** Verfahren zur Herstellung einer Polyisocyanatzusammensetzung, umfassend das

(A) Umsetzen von zwei oder mehreren Aminsalzen einer Sulfonsäure mit einer aktiven Wasserstoffgruppe mit einem Polyisocyanat, oder das
(B) Umsetzen einer Sulfonsäure mit einer aktiven Wasserstoffgruppe, eines Polyisocyanats, mindestens einer Aminverbindung der folgenden allgemeinen Formel (1) und mindestens einer Aminverbindung der folgenden allgemeinen Formel (2), oder das Umsetzen einer Sulfonsäure mit einer aktiven Wasserstoffgruppe, eines Polyisocyanats und von mindestens zwei Aminverbindungen der allgemeinen Formel (1) mit unterschiedlichen Gesamtkohlenstoffzahlen von $R^{11}$, $R^{12}$ und $R^{13}$, wobei

die Reaktion bei einem Molverhältnis Isocyanatgruppe/aktive Wasserstoffgruppe von 2 bis 400 durchgeführt wird, das Aminsalz einer Sulfonsäure mit einer aktiven Wasserstoffgruppe ein Salz der Sulfonsäure mit einer aktiven Wasserstoffgruppe mit mindestens einer Aminverbindung der allgemeinen Formel (1) und mindestens einer Aminverbindung der allgemeinen Formel (2) oder ein Salz der Sulfonsäure mit einer aktiven Wasserstoffgruppe mit mindestens zwei Aminverbindungen der allgemeinen Formel (1) ist,

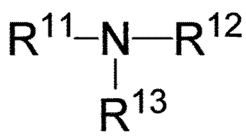

(1)

in Formel (1) sind $R^{11}$, $R^{12}$ und $R^{13}$ jeweils unabhängig voneinander eine Kohlenwasserstoffgruppe mit 1 bis 6 Kohlenstoffatomen, die eine Etherbindung enthalten kann, mindestens einer der Reste $R^{11}$, $R^{12}$ und $R^{13}$ kann eine Ringstruktur enthalten, zwei oder mehrere der Reste $R^{11}$, $R^{12}$ und $R^{13}$ können unter Bildung einer Ringstruktur aneinander gebunden sein, die ein aromatischer Ring, eine Cycloalkylgruppe mit 5 oder 6 Kohlenstoffatomen, ein 5-gliedriger oder 6-gliedriger Ring, in dem $R^{11}$ und $R^{12}$ aneinander gebunden sind, oder ein mehrgliedriger Mehrfachring ist, in dem $R^{11}$, $R^{12}$ und $R^{13}$ aneinander gebunden sind, wobei die Gesamtkohlenstoffzahl von $R^{11}$, $R^{12}$ und $R^{13}$ 8 oder weniger beträgt,

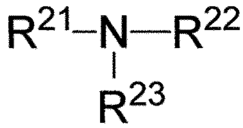

(2)

in Formel (2) sind $R^{21}$, $R^{22}$ und $R^{23}$ jeweils unabhängig voneinander eine Kohlenwasserstoffgruppe mit 1 bis 19 Kohlenstoffatomen, die eine Etherbindung enthalten kann, mindestens einer der Reste $R^{21}$, $R^{22}$ und $R^{23}$ kann eine Ringstruktur enthalten, zwei oder mehrere der Reste $R^{21}$, $R^{22}$ und $R^{23}$ können unter Bildung einer Ringstruktur aneinander gebunden sein, die ein aromatischer Ring, eine Cycloalkylgruppe mit 5 oder 6 Kohlenstoffatomen, ein 5-gliedriger oder 6-gliedriger Ring, in dem $R^{21}$ und $R^{22}$ aneinander gebunden sind, oder ein mehrgliedriger Mehrfachring ist, in dem $R^{21}$, $R^{22}$ und $R^{23}$ aneinander gebunden sind, wobei die Gesamtkohlenstoffzahl von $R^{21}$, $R^{22}$ und $R^{23}$ 9 oder mehr beträgt.

**11.** Verfahren zur Herstellung einer Polyisocyanatzusammensetzung nach Anspruch 10, wobei die aktive Wasserstoffgruppe mindestens eine Gruppe ist, die aus der aus einer Aminogruppe und einer Hydroxylgruppe bestehenden Gruppe ausgewählt ist.

**12.** Verfahren zur Herstellung einer Polyisocyanatzusammensetzung nach Anspruch 10 oder 11, wobei die Sulfonsäure mit einer aktiven Wasserstoffgruppe eine Verbindung der folgenden allgemeinen Formel (3) ist,

$HO\text{-}R^{31}\text{-}SO_3H$ (3)

in Formel (3) ist $R^{31}$ eine Kohlenwasserstoffgruppe mit 1 bis 10 Kohlenstoffatomen, die mindestens eine Gruppe enthalten kann, die aus der aus einer Hydroxylgruppe, einer Etherbindung, einer Esterbindung, einer Carbonylgruppe und einer Iminogruppe bestehenden Gruppe ausgewählt ist, $R^{31}$ kann eine Ringstruktur enthalten, die ein aromatischer Ring, ein 5-gliedriger oder 6-gliedriger Ring, der zwei Stickstoffatome enthält, oder ein 5-gliedriger oder 6-gliedriger Ring ist, der ein Stickstoffatom und ein Sauerstoffatom enthält.

**13.** Verfahren zur Herstellung einer Polyisocyanatzusammensetzung nach einem der Ansprüche 10 bis 12, wobei in dem Aminsalz einer Sulfonsäure das Molverhältnis zwischen der Aminverbindung der allgemeinen Formel (1) und der Aminverbindung der allgemeinen Formel (2) 10/90 bis 90/10 beträgt.

**14.** Beschichtungszusammensetzung, umfassend die Polyisocyanatzusammensetzung nach einem der Ansprüche 1 bis 9.

**15.** Mit der Beschichtungszusammensetzung nach Anspruch 14 beschichtetes Substrat.

## Revendications

**1.** Composition de polyisocyanate, comprenant
un polyisocyanate contenant un groupe anion d'acide sulfonique dans la molécule ; et
au moins un cation d'ammonium tertiaire d'un composé amine représenté par la formule générale (1) suivante et au moins un cation d'ammonium tertiaire d'un composé amine représenté par la formule générale (2) suivante, ou au moins deux cations d'ammonium tertiaire des composés amine représentés par la formule générale (1) ayant différents nombres totaux d'atomes de carbone de $R^{11}$, $R^{12}$ et $R^{13}$,

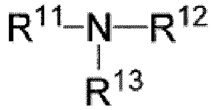

(1)

dans la formule (1), $R^{11}$, $R^{12}$ et $R^{13}$ sont chacun indépendamment un groupe hydrocarboné ayant de 1 à 6 atomes de carbone qui peut contenir une liaison éther, au moins l'un de $R^{11}$, $R^{12}$ et $R^{13}$ peut contenir une structure cyclique, et deux ou plus de $R^{11}$, $R^{12}$ et $R^{13}$ peuvent être liés les uns aux autres pour former une structure cyclique, la structure cyclique est un cycle aromatique, un groupe cycloalkyle ayant 5 ou 6 atomes de carbone, un cycle à 5 chaînons ou à 6 chaînons dans lequel $R^{11}$ et $R^{12}$ sont liés l'un à l'autre, ou un cycle multiple à plusieurs chaînons dans lequel

$R^{11}$, $R^{12}$ et $R^{13}$ sont liés les uns aux autres, le nombre total d'atomes de carbone de $R^{11}$, $R^{12}$ et $R^{13}$ est de 8 ou moins,

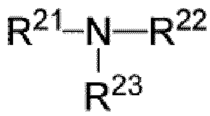

(2)

dans la formule (2), $R^{21}$, $R^{22}$ et $R^{23}$ sont chacun indépendamment un groupe hydrocarboné ayant de 1 à 19 atomes de carbone qui peut contenir une liaison éther, au moins l'un de $R^{21}$, $R^{22}$ et $R^{23}$ peut contenir une structure cyclique, et deux ou plus de $R^{21}$, $R^{22}$ et $R^{23}$ peuvent être liés les uns aux autres pour former une structure cyclique, la structure cyclique peut être un cycle aromatique, un groupe cycloalkyle ayant 5 ou 6 atomes de carbone, un cycle à 5 chaînons ou à 6 chaînons dans lequel $R^{21}$ et $R^{22}$ sont liés l'un à l'autre, ou un cycle multiple à plusieurs chaînons, dans lequel $R^{21}$, $R^{22}$ et $R^{23}$ sont liés l'un à l'autre, et le nombre total d'atomes de carbone de $R^{21}$, $R^{22}$ et $R^{23}$ est de 9 ou plus.

2. Composition de polyisocyanate selon la revendication 1, dans laquelle
le polyisocyanate contenant un groupe anion d'acide sulfonique dans la molécule est un obtenu par une réaction de deux sels d'amine ou plus d'un acide sulfonique ayant un groupe hydrogène actif avec un polyisocyanate, et
le sel d'amine d'un acide sulfonique ayant un groupe hydrogène actif est un sel d'un acide sulfonique ayant un groupe hydrogène actif avec au moins un composé amine représenté par la formule générale (1) et au moins un composé amine représenté par la formule générale (2), ou un sel d'un acide sulfonique ayant un groupe hydrogène actif avec au moins deux composés amine représentés par la formule générale (1).

3. Composition de polyisocyanate selon la revendication 2, dans laquelle le groupe hydrogène actif est un groupe hydroxyle.

4. Composition de polyisocyanate selon la revendication 2 ou 3, dans laquelle l'acide sulfonique ayant un groupe hydrogène actif est un composé représenté par la formule générale (3) suivante,

$$HO\text{-}R^{31}\text{-}SO_3H \qquad (3)$$

dans la formule (3), $R^{31}$ est un groupe hydrocarboné ayant de 1 à 10 atomes de carbone qui peut contenir au moins un choisi dans le groupe constitué d'un groupe hydroxyle, d'une liaison éther, d'une liaison ester, d'un groupe carbonyle et d'un groupe imino, $R^{31}$ peut contenir une structure cyclique, la structure cyclique est un cycle aromatique, un cycle à 5 chaînons ou à 6 chaînons contenant deux atomes d'azote, ou un cycle à 5 chaînons ou à 6 chaînons contenant un atome d'azote et un atome d'oxygène.

5. Composition de polyisocyanate selon la revendication 1, dans laquelle le polyisocyanate contenant un groupe anion d'acide sulfonique dans la molécule est un obtenu par une réaction d'un acide sulfonique ayant un groupe hydrogène actif avec un polyisocyanate.

6. Composition de polyisocyanate selon la revendication 5, dans laquelle le groupe hydrogène actif est un groupe amino.

7. Composition de polyisocyanate selon la revendication 5 ou 6, dans laquelle l'acide sulfonique ayant un groupe hydrogène actif est un composé représenté par la formule générale (4) suivante,

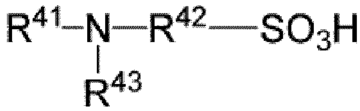

(4)

dans la formule (4), $R^{41}$ et $R^{43}$ sont chacun indépendamment un atome d'hydrogène ou un groupe hydrocarboné ayant de 1 à 12 atomes de carbone qui peut contenir un groupe hydroxyle, au moins l'un de $R^{41}$ et $R^{43}$ est un atome d'hydrogène, $R^{42}$ est un groupe hydrocarboné ayant de 1 à 12 atomes de carbone qui peut contenir un groupe hydroxyle.

8. Composition de polyisocyanate selon l'une quelconque des revendications 1 à 7, dans laquelle
le composé amine représenté par la formule générale (1) est au moins un choisi dans le groupe constitué d'un composé amine cyclique, d'un composé amine contenant un groupe hydrocarboné aliphatique à chaîne et d'un

composé amine contenant un groupe hydrocarboné aliphatique cyclique, et
le composé amine représenté par la formule générale (2) est au moins un choisi dans le groupe constitué d'un composé amine contenant un groupe hydrocarboné aliphatique à chaîne et d'un composé amine contenant un groupe hydrocarboné aliphatique cyclique.

**9.** Composition de polyisocyanate selon l'une quelconque des revendications 1 à 8, dans laquelle
le polyisocyanate est au moins un choisi dans le groupe constitué d'un polyisocyanate aliphatique, d'un polyisocyanate alicyclique et d'un polyisocyanate araliphatique.

**10.** Procédé de production d'une composition de polyisocyanate, comprenant

(A) la réaction de deux ou plus de sels d'amine d'un acide sulfonique ayant un groupe hydrogène actif avec un polyisocyanate, ou
(B) la réaction d'un acide sulfonique ayant un groupe hydrogène actif, d'un polyisocyanate, d'au moins un composé amine représenté par la formule générale (1) suivante et d'au moins un composé amine représenté par la formule générale (2) suivante, ou la réaction d'un acide sulfonique ayant un groupe hydrogène actif, d'un polyisocyanate, et d'au moins deux composés amine représentés par la formule générale (1) ayant différents nombres totaux d'atomes de carbone de $R^{11}$, $R^{12}$ et $R^{13}$, dans lequel la réaction est réalisée à un rapport molaire de groupe isocyanate/groupe hydrogène actif de 2 à 400,

le sel d'amine d'un acide sulfonique ayant un groupe hydrogène actif est un sel de l'acide sulfonique ayant un groupe hydrogène actif avec au moins un composé amine représenté par la formule générale (1) et au moins un composé amine représenté par la formule générale (2), ou un sel de l'acide sulfonique ayant un groupe hydrogène actif avec au moins deux composés amine représentés par la formule générale (1),

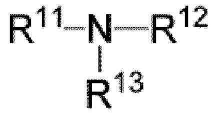 (1)

dans la formule (1), $R^{11}$, $R^{12}$ et $R^{13}$ sont chacun indépendamment un groupe hydrocarboné ayant de 1 à 6 atomes de carbone qui peut contenir une liaison éther, au moins l'un de $R^{11}$, $R^{12}$ et $R^{13}$ peut contenir une structure cyclique, deux ou plus de $R^{11}$, $R^{12}$ et $R^{13}$ peuvent être liés les uns aux autres pour former une structure cyclique, la structure cyclique est un cycle aromatique, un groupe cycloalkyle ayant 5 ou 6 atomes de carbone, un cycle à 5 chaînons ou à 6 chaînons dans lequel $R^{11}$ et $R^{12}$ sont liés l'un à l'autre, ou un cycle multiple à plusieurs chaînons dans lequel $R^{11}$, $R^{12}$ et $R^{13}$ sont liés les uns aux autres, et le nombre total d'atomes de carbone de $R^{11}$, $R^{12}$ et $R^{13}$ est de 8 ou moins,

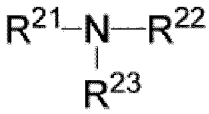 (2)

dans la formule (2), $R^{21}$, $R^{22}$ et $R^{23}$ sont chacun indépendamment un groupe hydrocarboné ayant de 1 à 19 atomes de carbone qui peut contenir une liaison éther, au moins l'un de $R^{21}$, $R^{22}$ et $R^{23}$ peut contenir une structure cyclique, deux ou plus de $R^{21}$, $R^{22}$ et $R^{23}$ peuvent être liés les uns aux autres pour former une structure cyclique, la structure cyclique est un cycle aromatique, un groupe cycloalkyle ayant 5 ou 6 atomes de carbone, un cycle à 5 chaînons ou à 6 chaînons dans lequel $R^{21}$ et $R^{22}$ sont liés l'un à l'autre, ou un cycle multiple à plusieurs chaînons dans lequel $R^{21}$, $R^{22}$ et $R^{23}$ sont liés l'un à l'autre, le nombre total d'atomes de carbone de $R^{21}$, $R^{22}$ et $R^{23}$ est de 9 ou plus.

**11.** Procédé de production d'une composition de polyisocyanate selon la revendication 10, dans lequel le groupe hydrogène actif est au moins un choisi dans le groupe constitué d'un groupe amino et d'un groupe hydroxyle.

**12.** Procédé de production d'une composition de polyisocyanate selon la revendication 10 ou 11, dans lequel l'acide sulfonique ayant un groupe hydrogène actif est un composé représenté par la formule générale (3) suivante,

$$HO\text{-}R^{31}\text{-}SO_3H \qquad (3)$$

dans la formule (3), $R^{31}$ est un groupe hydrocarboné ayant de 1 à 10 atomes de carbone qui peut contenir au moins un choisi dans le groupe constitué d'un groupe hydroxyle, d'une liaison éther, d'une liaison ester, d'un groupe carbonyle et d'un groupe imino, $R^{31}$ peut contenir une structure cyclique, la structure cyclique est un cycle aromatique, un cycle à 5 chaînons ou à 6 chaînons contenant deux atomes d'azote, ou un cycle à 5 chaînons ou à 6 chaînons contenant un atome d'azote et un atome d'oxygène.

**13.** Procédé de production d'une composition de polyisocyanate selon l'une quelconque des revendications 10 à 12, dans lequel dans le sel d'amine d'un acide sulfonique, le rapport molaire entre le composé amine représenté par la formule générale (1) et le composé amine représenté par la formule générale (2) est de 10/90 à 90/10.

**14.** Composition de revêtement comprenant la composition de polyisocyanate selon l'une quelconque des revendications 1 à 9.

**15.** Substrat revêtu revêtu de la composition de revêtement selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H8176267 B
- JP 2015205957 A
- JP 2016017157 A
- JP 4806511 B
- WO 2015035673 PCT